# EUROPEAN PATENT SPECIFICATION

(11) **EP 3 945 484 B1**
(45) Date of publication and mention of the grant of the patent: **12.03.2025**
(21) Application number: 21173653.3
(22) Date of filing: 12.05.2021
(51) Int. Cl.: G06F 16/35, G06Q 10/107, G06Q 10/08

(54) **SYSTEMS AND METHODS FOR OBTAINING INFORMATION FROM A DIGITAL MESSAGE**
SYSTEME UND VERFAHREN ZUR GEWINNUNG VON INFORMATIONEN AUS EINER DIGITALEN NACHRICHT
SYSTÈMES ET PROCÉDÉS PERMETTANT D'OBTENIR DES INFORMATIONS À PARTIR D'UN MESSAGE NUMÉRIQUE

(30) Priority: 30.07.2020 US 202016943029
(43) Date of publication of application: 02.02.2022
(73) Proprietor: Shopify Inc., Ottawa, ON K2P 2L8 (CA)
(72) Inventor: Manggala, Putra, Amsterdam (NL); Olsson, Vera, Märsta (SE); Vlasenko, Anton, Stockholm (SE)
(74) Representative: Murgitroyd & Company

(56) References cited:
- US-A1- 2014 337 245
- US-B2- 9 043 403
- ANONYMOUS: "Carrier Tracking URLs - E-Ship Guy", 19 August 2018 (2018-08-19), XP055981621, Retrieved from the Internet <URL:https://web.archive.org/web/20180819173811/https://eshipguy.com/tracking/> [retrieved on 20221115]
- ANONYMOUS: "Google divorces ML Kit from Firebase, adds entity extraction and pose detection APIs | VentureBeat", 23 July 2020 (2020-07-23), pages 1 - 5, XP055856495, Retrieved from the Internet <URL:https://venturebeat.com/2020/06/23/google-divorces-ml-kit-from-firebase-adds-entity-extraction-and-pose-detection-apis/> [retrieved on 20211029]

## Description

### FIELD

The present application relates to obtaining information from a digital message, and in particular embodiments, to obtaining shipping information from a digital message.

### BACKGROUND

When a customer orders a product through an online store, the customer may receive an email or other message that provides shipping information for tracking a shipment of the product. This shipping information may include a shipping provider that is facilitating the shipment, a tracking number for the shipment, and a uniform resource locator (URL) that corresponds to a webpage or other web resource for tracking the shipment. Using the web resource, the customer may be able to view the status of the shipment and/or an expected delivery date for the shipment. The web resource may also include the shipping provider and/or the tracking number for the shipment.
US9043403B2 describes an email system which provides annotations associated with email to recipients and allows the recipients to interact with annotated email. The system receives email and determines whether the received email includes items that should be annotated. Responsive to determining that an email includes items that should be annotated, the system acquires annotated information related to the email. The received email and associated annotated information are stored in the email system. When a request is received to access email for a specific user, the email system displays an email listing, identifying email that is associated with an annotation using a visual representation. If the recipient responds to an annotation, the system receives and stores the recipient's response. The system then sends the recipient's response to the sender of the email. The system also receives updates to received email from email senders and displays email updates to the appropriate recipients.
US2014337245A1 describes a method for compiling shipping information where one or more emails are received. A processor analyzes the one or more emails to determine tracking information and initial shipping information for one or more shipments. A processor determines current shipping information for each of the one or more shipments using the tracking information for each respective shipment.

### SUMMARY

In some cases, messages that provide shipping information may become buried in a customer's inbox, making it difficult for the customer to later locate the message and obtain the shipping information. This issue may be compounded for customers that frequently order products online and may have multiple pending product shipments at any given time. The tracking information for each of these shipments will often be provided in different messages, which can be challenging and time-consuming to organize. As such, the customer may have difficulty locating the shipping information for some products and may even lose track of those products. Additionally or alternatively, a message providing tracking information for a given shipment may be written in a language that a customer may not be most familiar with and which may hinder identification, locating, and/or comprehension of the tracking information.

Some embodiments of the present disclosure provide computer-implemented systems and methods for automatically extracting shipping information from a user's digital messages, including email messages, text messages and the like. The shipping information can then be added to a consolidated list of shipping information for the user, which allows the user to avoid manually organizing and keeping track of the messages and/or the shipping information. Put another way, once extracted, shipping information etc. may be presented to a user such as, for example, in a defined and/or consistent format and/or may be employed in providing such a presentation. Conveniently, in this way, a customer/user may be presented with information at a glance about a variety of shipments, such as, for example, an aggregated summary listing of all of the outstanding (e.g., not yet delivered) shipments for which shipping information was identified based on a set of messages (e.g., messages in a user's one or more inboxes). Additionally, or alternatively, such shipping information may be employed to other ends such as, for example, to provide a user with updates regarding their various shipments, potentially for some or all of their outstanding shipments. For example, such updates could be presented together to a user in a defined and/or consistent format. In a particular example, such updates could be presented by way of a suitable aggregated summary such as may list or otherwise provide access to tracking information/updates for the various shipments.

Identification of shipping information based on a message such as, for example, an email message, may be non-trivial for a variety of reasons. First, messages providing shipping information may be in a variety of formats. For example, a message providing information about a pending shipment from a particular merchant/shipper/carrier may be in a first format (e.g., in terms of the contents of the message and/or its layout/arrangement within the message), while another merchant/shipper/carrier may employ a different format. Furthermore, such formats may change from time-to-time or vary depending on various factors even for the same merchant/shipper/carrier. Additionally, in some cases, messages providing an indication of a shipment may not include shipping information directly in the message but rather may include one or more URLs that can be used to access a webpage or other web resource whereby information about a given shipment may be obtained. For example, such information may include tracking information, tracking numbers, etc.. The format of these URLs and the webpages to which they correspond may vary between merchants/shippers/carriers similar to as was discussed above for the formats of the message. Furthermore, not only may the format of URLs and/or the contents/layout/format of webpages to which they correspond vary between merchants/shippers/carriers, in some cases they may also vary or change from time to time and/or based on various other factors for a given merchant/shipper/carrier.

The present application describes various manners of obtaining and extracting shipping information based on messages. For example, shipping information may be obtained based on messages arriving in a user's inbox(es) such as, for example, their email inbox and/or their text message (SMS) inbox. In some embodiments, shipping information is obtained from a message by a) extracting URLs from the message, b) analysing the URLs to determine and/or confirm shipping information, and c) analyzing a web resource corresponding to the URL to determine and/or confirm shipping information. Probabilistic methods are provided to determine the shipping information from the URL and/or the web resource. When compared to deterministic methods, for example, these probabilistic methods may be better suited to handling the vast number of shipping providers, fulfillment networks, postal service providers and last-mile delivery services that could be employed in the shipment of a product. Thus, the probabilistic methods may offer a more reliable way to determine shipping information from a message.

According to an aspect of the present disclosure, a computer-implemented method is provided. The method includes identifying a plurality of messages for a customer and extracting from the plurality of messages, shipping information for at least one shipment. The extracting includes obtaining digital content corresponding to a given message of the plurality of messages and obtaining a URL for a web resource from the digital content. The method also includes determining, based on the URL and on the web resource, shipping information for a shipment. The shipping information includes at least one of an indication that the web resource is for tracking the shipment, a tracking number for the shipment, and a shipping provider for the shipment. The method further includes storing, in memory, the shipping information for obtaining tracking updates for the shipment.

The shipping information can be used to obtain tracking updates for the at least one shipment. The tracking updates can be provided for use in presenting an aggregated summary of product shipments for the customer.

The shipping information can be determined from the URL and the web resource in any of a number of different ways. In some embodiments, determining the shipping information includes determining the tracking number and the shipping provider by parsing the URL, and confirming the tracking number and the shipping provider by parsing the web resource. In some embodiments, determining the shipping information includes determining one of the tracking number and the shipping provider by parsing the URL, and determining the other of the tracking number and the shipping provider by parsing the web resource. In some embodiments, determining the shipping information includes determining the tracking number and the shipping provider by parsing the web resource.

Machine learning (ML) models may be implemented to help determine the shipping information. Any, one, some or all of these ML models may be multi-task learning (MTL) models. In some embodiments, determining the shipping information includes inputting the URL into an ML model, and obtaining, based on an output of the ML model, a text string corresponding to the tracking number from the URL. Determining the shipping information may further include obtaining a prediction, the prediction comprising a first index corresponding to a start of the tracking number in the URL and a second index corresponding to an end of the tracking number in the URL, and inputting the first index and the second index into the ML model.

In some embodiments, determining the shipping information includes inputting the URL into an ML model, and obtaining, from an output of the ML model, a text string corresponding to the shipping provider that is selected from a set of predefined shipping providers.

In some embodiments, multiple URLs can be obtained from the digital content of the message. For example, the method can further include obtaining, from the digital content, a second URL for a second web resource. The method can also include determining, based on the second URL and on the second web resource, that the second web resource is for tracking the shipment, a second tracking number for the shipment, and a second shipping provider for the shipment. The first URL and the second URL may relate to the same shipment. Therefore, the method may further include determining that the first tracking number matches the second tracking number and that the first shipping provider matches the second shipping provider.

In some embodiments, the method further includes a step of determining, based on the digital content, that the message relates to tracking the shipment. This step may include inputting the digital content into an ML model; obtaining, from an output of the ML model, a message category for the message that is selected from a set of predefined message categories; and determining that the message category relates to shipment tracking. This step may also or instead include inputting the URL into an ML model; obtaining, from an output of the ML model, a URL category for the URL that is selected from a set of predefined URL categories; and determining that the URL category relates to shipment tracking.

In some embodiments, the message corresponds to a particular user. The method may include storing the shipping information in a shipping information record for a and/or their text message (SMS) inbox. In some embodiments, shipping information is obtained from a message by a) extracting URLs from the message, b) analysing the URLs to determine and/or confirm shipping information, and c) analyzing a web resource corresponding to the URL to determine and/or confirm shipping information. Probabilistic methods are provided to determine the shipping information from the URL and/or the web resource. When compared to deterministic methods, for example, these probabilistic methods may be better suited to handling the vast number of shipping providers, fulfillment networks, postal service providers and last-mile delivery services that could be employed in the shipment of a product. Thus, the probabilistic methods may offer a more reliable way to determine shipping information from a message.

According to an aspect of the present disclosure, a computer-implemented method is provided. The method includes identifying a plurality of messages for a customer and extracting from the plurality of messages, shipping information for at least one shipment. The extracting includes obtaining digital content corresponding to a given message of the plurality of messages and obtaining a URL for a web resource from the digital content. The method also includes determining, based on the URL and on the web resource, shipping information for a shipment. The shipping information includes at least one of an indication that the web resource is for tracking the shipment, a tracking number for the shipment, and a shipping provider for the shipment. The method further includes storing, in memory, the shipping information for obtaining tracking updates for the shipment.

The shipping information can be used to obtain tracking updates for the at least one shipment. The tracking updates can be provided for use in presenting an aggregated summary of product shipments for the customer.

The shipping information can be determined from the URL and the web resource in any of a number of different ways. In some embodiments, determining the shipping information includes determining the shipping provider by parsing the URL, and confirming the the shipping provider by parsing the web resource. In some embodiments, determining the shipping information includes determining the shipping provider by parsing the web resource.

According to claim 1, machine learning (ML) models are implemented to help determine the shipping information. Any, one, some or all of these ML models may be multi-task learning (MTL) models. Determining the shipping information includes inputting the URL into an ML model, and obtaining, based on an output of the ML model, a text string corresponding to the tracking number from the URL. Determining the shipping information may further include obtaining a prediction, the prediction comprising a first index corresponding to a start of the tracking number in the URL and a second index corresponding to an end of the tracking number in the URL, and inputting the first index and the second index into the ML model.

In some embodiments, determining the shipping information includes inputting the URL into an ML model, and obtaining, from an output of the ML model, a text string corresponding to the shipping provider that is selected from a set of predefined shipping providers.

In some embodiments, multiple URLs can be obtained from the digital content of the message. For example, the method can further include obtaining, from the digital content, a second URL for a second web resource. The method can also include determining, based on the second URL and on the second web resource, that the second web resource is for tracking the shipment, a second tracking number for the shipment, and a second shipping provider for the shipment. The first URL and the second URL may relate to the same shipment. Therefore, the method may further include determining that the first tracking number matches the second tracking number and that the first shipping provider matches the second shipping provider.

In some embodiments, the method further includes a step of determining, based on the digital content, that the message relates to tracking the shipment. This step may include inputting the digital content into an ML model; obtaining, from an output of the ML model, a message category for the message that is selected from a set of predefined message categories; and determining that the message category relates to shipment tracking. This step may also or instead include inputting the URL into an ML model; obtaining, from an output of the ML model, a URL category for the URL that is selected from a set of predefined URL categories; and determining that the URL category relates to shipment tracking.

In some embodiments, the message corresponds to a particular user. The method may include storing the shipping information in a shipping information record for a understood to be references to users, such as where a user is a merchant-user (e.g., a seller, retailer, wholesaler, or provider of products), a customer-user (e.g., a buyer, purchase agent, or user of products), a prospective user (e.g., a user browsing and not yet committed to a purchase, a user evaluating the e-commerce platform 100 for potential use in marketing and selling products, and the like), a service provider user (e.g., a shipping provider 112, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like.

The e-commerce platform 100 may provide a centralized system for providing merchants with online resources and facilities for managing their business. The facilities described herein may be deployed in part or in whole through a machine that executes computer software, modules, program codes, and/or instructions on one or more processors which may be part of or external to the platform 100. Merchants may utilize the e-commerce platform 100 for managing commerce with customers, such as by implementing an e-commerce experience with customers through an online store 138, through channels 110A-B, through POS devices 152 in physical locations (e.g., a physical storefront or other location such as through a kiosk, terminal, reader, printer, 3D printer, and the like), by managing their business through the e-commerce platform 100, and by interacting with customers through a communications facility 129 of the e-commerce platform 100, or any combination thereof. A merchant may utilize the e-commerce platform 100 as a sole commerce presence with customers, or in conjunction with other merchant commerce facilities, such as through a physical store (e.g., 'brick-and-mortar' retail stores), a merchant off-platform website 104 (e.g., a commerce Internet website or other internet or web property or asset supported by or on behalf of the merchant separately from the e-commerce platform), and the like. However, even these 'other' merchant commerce facilities may be incorporated into the e-commerce platform, such as where POS devices 152 in a physical store of a merchant are linked into the e-commerce platform 100, where a merchant off-platform website 104 is tied into the e-commerce platform 100, such as through 'buy buttons' that link content from the merchant off platform website 104 to the online store 138, and the like.

The online store 138 may represent a multitenant facility comprising a plurality of virtual storefronts. In embodiments, merchants may manage one or more storefronts in the online store 138, such as through a merchant device 102 (e.g., computer, laptop computer, mobile computing device, and the like), and offer products to customers through a number of different channels 110A-B (e.g., an online store 138; a physical storefront through a POS device 152; electronic marketplace, through an electronic buy button integrated into a website or social media channel such as on a social network, social media page, social media messaging system; and the like). A merchant may sell across channels 110A-B and then manage their sales through the e-commerce platform 100, where channels 110A may be provided internal to the e-commerce platform 100 or from outside the e-commerce channel 110B. A merchant may sell in their physical retail store, at pop ups, through wholesale, over the phone, and the like, and then manage their sales through the e-commerce platform 100. A merchant may employ all or any combination of these, such as maintaining a business through a physical storefront utilizing POS devices 152, maintaining a virtual storefront through the online store 138, and utilizing a communication facility 129 to leverage customer interactions and analytics 132 to improve the probability of sales. Throughout this disclosure the terms online store 138 and storefront may be used synonymously to refer to a merchant's online e-commerce offering presence through the e-commerce platform 100, where an online store 138 may refer to the multitenant collection of storefronts supported by the e-commerce platform 100 (e.g., for a plurality of merchants) or to an individual merchant's storefront (e.g., a merchant's online store).

In some embodiments, a customer may interact through a customer device 150 (e.g., computer, laptop computer, mobile computing device, and the like), a POS device 152 (e.g., retail device, a kiosk, an automated checkout system, and the like), or any other commerce interface device known in the art. The e-commerce platform 100 may enable merchants to reach customers through the online store 138, through POS devices 152 in physical locations (e.g., a merchant's storefront or elsewhere), to promote commerce with customers through dialog via electronic communication facility 129, and the like, providing a system for reaching customers and facilitating merchant services for the real or virtual pathways available for reaching and interacting with customers.

In some embodiments, and as described further herein, the e-commerce platform 100 may be implemented through a processing facility including a processor and a memory, the processing facility storing a set of instructions that, when executed, cause the e-commerce platform 100 to perform the e-commerce and support functions as described herein. The processing facility may be part of a server, client, network infrastructure, mobile computing platform, cloud computing platform, stationary computing platform, or other computing platform, and provide electronic connectivity and communications between and amongst the electronic components of the e-commerce platform 100, merchant devices 102, payment gateways 106, application developers, channels 110A-B, shipping providers 112, customer devices 150, point of sale devices 152, and the like. The e-commerce platform 100 may be implemented as a cloud computing service, a software as a service (SaaS), infrastructure as a service (IaaS), platform as a service (PaaS), desktop as a Service (DaaS), managed software as a service (MSaaS), mobile backend as a service (MBaaS), information technology management as a service (ITMaaS), and the like, such as in a software and delivery model in which software is licensed on a subscription basis and centrally hosted (e.g., accessed by users using a client (for example, a thin client) via a web browser or other application, accessed through by POS devices, and the like). In some embodiments, elements of the e-commerce platform 100 may be implemented to operate on various platforms and operating systems, such as iOS, Android, on the web, and the like (e.g., the administrator 114 being implemented in multiple instances for a given online store for iOS, Android, and for the web, each with similar functionality).

In some embodiments, the online store 138 may be served to a customer device 150 through a webpage provided by a server of the e-commerce platform 100. The server may receive a request for the webpage from a browser or other application installed on the customer device 150, where the browser (or other application) connects to the server through an IP Address, the IP address obtained by translating a domain name. In return, the server sends back the requested webpage. Webpages may be written in or include Hypertext Markup Language (HTML), template language, JavaScript, and the like, or any combination thereof. For instance, HTML is a computer language that describes static information for the webpage, such as the layout, format, and content of the webpage. Website designers and developers may use the template language to build webpages that combine static content, which is the same on multiple pages, and dynamic content, which changes from one page to the next. A template language may make it possible to re-use the static elements that define the layout of a webpage, while dynamically populating the page with data from an online store. The static elements may be written in HTML, and the dynamic elements written in the template language. The template language elements in a file may act as placeholders, such that the code in the file is compiled and sent to the customer device 150 and then the template language is replaced by data from the online store 138, such as when a theme is installed. The template and themes may consider tags, objects, and filters. The client device web browser (or other application) then renders the page accordingly.

In some embodiments, online stores 138 may be served by the e-commerce platform 100 to customers, where customers can browse and purchase the various products available (e.g., add them to a cart, purchase immediately through a buy-button, and the like). Online stores 138 may be served to customers in a transparent fashion without customers necessarily being aware that it is being provided through the e-commerce platform 100 (rather than directly from the merchant). Merchants may use a merchant configurable domain name, a customizable HTML theme, and the like, to customize their online store 138. Merchants may customize the look and feel of their website through a theme system, such as where merchants can select and change the look and feel of their online store 138 by changing their theme while having the same underlying product and business data shown within the online store's product hierarchy. Themes may be further customized through a theme editor, a design interface that enables users to customize their website's design with flexibility. Themes may also be customized using theme-specific settings that change aspects, such as specific colors, fonts, and pre-built layout schemes. The online store may implement a content management system for website content. Merchants may author blog posts or static pages and publish them to their online store 138, such as through blogs, articles, and the like, as well as configure navigation menus. Merchants may upload images (e.g., for products), video, content, data, and the like to the e-commerce platform 100, such as for storage by the system (e.g. as data 134). In some embodiments, the e-commerce platform 100 may provide functions for resizing images, associating an image with a product, adding and associating text with an image, adding an image for a new product variant, protecting images, and the like.

As described herein, the e-commerce platform 100 may provide merchants with transactional facilities for products through a number of different channels 110A-B, including the online store 138, over the telephone, as well as through physical POS devices 152 as described herein. The e-commerce platform 100 may include business support services 116, an administrator 114, and the like associated with running an on-line business, such as providing a domain service 118 associated with their online store, payment services 120 for facilitating transactions with a customer, shipping services 122 for providing customer shipping options for purchased products, risk and insurance services 124 associated with product protection and liability, merchant billing, and the like. Services 116 may be provided via the e-commerce platform 100 or in association with external facilities, such as through a payment gateway 106 for payment processing, shipping providers 112 for expediting the shipment of products, and the like.

In some embodiments, the e-commerce platform 100 may provide for integrated shipping services 122 (e.g., through an e-commerce platform shipping facility or through a third-party shipping carrier), such as providing merchants with real-time updates, tracking, automatic rate calculation, bulk order preparation, label printing, and the like.

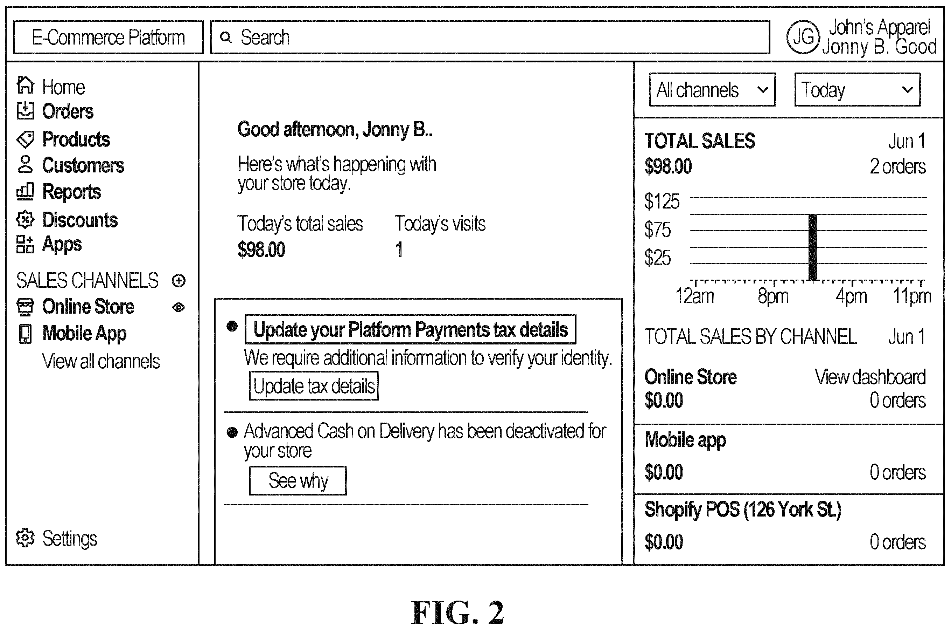

FIG. 2 depicts a non-limiting embodiment for a home page of an administrator 114, which may show information about daily tasks, a store's recent activity, and the next steps a merchant can take to build their business. In some embodiments, a merchant may log in to administrator 114 via a merchant device 102 such as from a desktop computer or mobile device, and manage aspects of their online store 138, such as viewing the online store's 138 recent activity, updating the online store's 138 catalog, managing orders, recent visits activity, total orders activity, and the like. In some embodiments, the merchant may be able to access the different sections of administrator 114 by using the sidebar, such as shown on FIG. 2. Sections of the administrator 114 may include various interfaces for accessing and managing core aspects of a merchant's business, including orders, products, customers, available reports and discounts. The administrator 114 may also include interfaces for managing sales channels for a store including the online store, mobile application(s) made available to customers for accessing the store (Mobile App), POS devices, and/or a buy button. The administrator 114 may also include interfaces for managing applications (Apps) installed on the merchant's account; settings applied to a merchant's online store 138 and account. A merchant may use a search bar to find products, pages, or other information. Depending on the device 102 or software application the merchant is using, they may be enabled for different functionality through the administrator 114. For instance, if a merchant logs in to the administrator 114 from a browser, they may be able to manage all aspects of their online store 138. If the merchant logs in from their mobile device (e.g. via a mobile application), they may be able to view all or a subset of the aspects of their online store 138, such as viewing the online store's 138 recent activity, updating the online store's 138 catalog, managing orders, and the like.

More detailed information about commerce and visitors to a merchant's online store 138 may be viewed through acquisition reports or metrics, such as displaying a sales summary for the merchant's overall business, specific sales and engagement data for active sales channels, and the like. Reports may include, acquisition reports, behavior reports, customer reports, finance reports, marketing reports, sales reports, custom reports, and the like. The merchant may be able to view sales data for different channels 110A-B from different periods of time (e.g., days, weeks, months, and the like), such as by using drop-down menus. An overview dashboard may be provided for a merchant that wants a more detailed view of the store's sales and engagement data. An activity feed in the home metrics section may be provided to illustrate an overview of the activity on the merchant's account. For example, by clicking on a 'view all recent activity' dashboard button, the merchant may be able to see a longer feed of recent activity on their account. A home page may show notifications about the merchant's online store 138, such as based on account status, growth, recent customer activity, and the like. Notifications may be provided to assist a merchant with navigating through a process, such as capturing a payment, marking an order as fulfilled, archiving an order that is complete, and the like.

The e-commerce platform 100 may provide for a communications facility 129 and associated merchant interface for providing electronic communications and marketing, such as utilizing an electronic messaging aggregation facility for collecting and analyzing communication interactions between merchants, customers, merchant devices 102, customer devices 150, POS devices 152, and the like, to aggregate and analyze the communications, such as for increasing the potential for providing a sale of a product, and the like. For instance, a customer may have a question related to a product, which may produce a dialog between the customer and the merchant (or automated processor-based agent representing the merchant), where the communications facility 129 analyzes the interaction and provides analysis to the merchant on how to improve the probability for a sale.

The e-commerce platform 100 may provide a financial facility 120 for secure financial transactions with customers, such as through a secure card server environment. The e-commerce platform 100 may store credit card information, such as in payment card industry data (PCI) environments (e.g., a card server), to reconcile financials, bill merchants, perform automated clearing house (ACH) transfers between an e-commerce platform 100 financial institution account and a merchant's bank account (e.g., when using capital), and the like. These systems may have Sarbanes-Oxley Act (SOX) compliance and a high level of diligence required in their development and operation. The financial facility 120 may also provide merchants with financial support, such as through the lending of capital (e.g., lending funds, cash advances, and the like) and provision of insurance. In addition, the e-commerce platform 100 may provide for a set of marketing and partner services and control the relationship between the e-commerce platform 100 and partners. They also may connect and onboard new merchants with the e-commerce platform 100. These services may enable merchant growth by making it easier for merchants to work across the e-commerce platform 100. Through these services, merchants may be provided help facilities via the e-commerce platform 100.

In some embodiments, online store 138 may support a great number of independently administered storefronts and process a large volume of transactional data on a daily basis for a variety of products. Transactional data may include customer contact information, billing information, shipping information, information on products purchased, information on services rendered, and any other information associated with business through the e-commerce platform 100. In some embodiments, the e-commerce platform 100 may store this data in a data facility 134. The transactional data may be processed to produce analytics 132, which in turn may be provided to merchants or third-party commerce entities, such as providing consumer trends, marketing and sales insights, recommendations for improving sales, evaluation of customer behaviors, marketing and sales modeling, trends in fraud, and the like, related to online commerce, and provided through dashboard interfaces, through reports, and the like. The e-commerce platform 100 may store information about business and merchant transactions, and the data facility 134 may have many ways of enhancing, contributing, refining, and extracting data, where over time the collected data may enable improvements to aspects of the e-commerce platform 100.

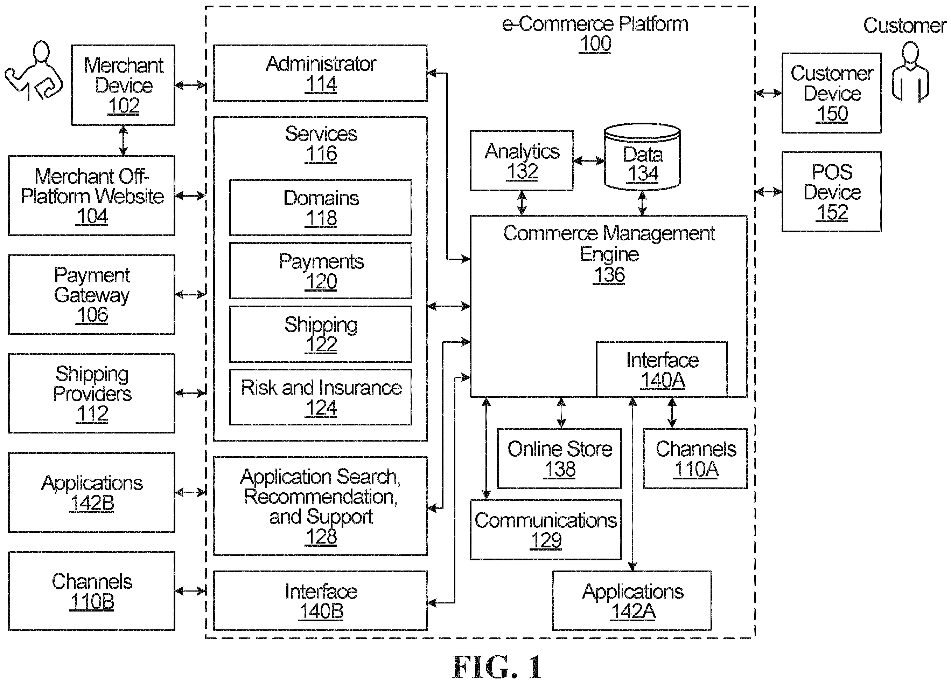

Referring again to FIG. 1, in some embodiments the e-commerce platform 100 may be configured with a commerce management engine 136 for content management, task automation and data management to enable support and services to the plurality of online stores 138 (e.g., related to products, inventory, customers, orders, collaboration, suppliers, reports, financials, risk and fraud, and the like), but be extensible through applications 142A-B that enable greater flexibility and custom processes required for accommodating an ever-growing variety of merchant online stores, POS devices, products, and services, where applications 142A may be provided internal to the e-commerce platform 100 or applications 142B from outside the e-commerce platform 100. In some embodiments, an application 142A may be provided by the same party providing the platform 100 or by a different party. In some embodiments, an application 142B may be provided by the same party providing the platform 100 or by a different party. The commerce management engine 136 may be configured for flexibility and scalability through portioning (e.g., sharding) of functions and data, such as by customer identifier, order identifier, online store identifier, and the like. The commerce management engine 136 may accommodate store-specific business logic and in some embodiments, may incorporate the administrator 114 and/or the online store 138.

The commerce management engine 136 includes base or "core" functions of the e-commerce platform 100, and as such, as described herein, not all functions supporting online stores 138 may be appropriate for inclusion. For instance, functions for inclusion into the commerce management engine 136 may need to exceed a core functionality threshold through which it may be determined that the function is core to a commerce experience (e.g., common to a majority of online store activity, such as across channels, administrator interfaces, merchant locations, industries, product types, and the like), is re-usable across online stores 138 (e.g., functions that can be re-used/modified across core functions), limited to the context of a single online store 138 at a time (e.g., implementing an online store 'isolation principle', where code should not be able to interact with multiple online stores 138 at a time, ensuring that online stores 138 cannot access each other's data), provide a transactional workload, and the like. Maintaining control of what functions are implemented may enable the commerce management engine 136 to remain responsive, as many required features are either served directly by the commerce management engine 136 or enabled through an interface 140A-B, such as by its extension through an application programming interface (API) connection to applications 142A-B and channels 110A-B, where interfaces 140A may be provided to applications 142A and/or channels 110A inside the e-commerce platform 100 or through interfaces 140B provided to applications 142B and/or channels 110B outside the e-commerce platform 100. Generally, the platform 100 may include interfaces 140A-B (which may be extensions, connectors, APIs, and the like) which facilitate connections to and communications with other platforms, systems, software, data sources, code and the like. Such interfaces 140A-B may be an interface 140A of the commerce management engine 136 or an interface 140B of the platform 100 more generally. If care is not given to restricting functionality in the commerce management engine 136, responsiveness could be compromised, such as through infrastructure degradation through slow databases or non-critical backend failures, through catastrophic infrastructure failure such as with a data center going offline, through new code being deployed that takes longer to execute than expected, and the like. To prevent or mitigate these situations, the commerce management engine 136 may be configured to maintain responsiveness, such as through configuration that utilizes timeouts, queues, back-pressure to prevent degradation, and the like.

Although isolating online store data is important to maintaining data privacy between online stores 138 and merchants, there may be reasons for collecting and using cross-store data, such as for example, with an order risk assessment system or a platform payment facility, both of which require information from multiple online stores 138 to perform well. In some embodiments, rather than violating the isolation principle, it may be preferred to move these components out of the commerce management engine 136 and into their own infrastructure within the e-commerce platform 100.

In some embodiments, the e-commerce platform 100 may provide for a platform payment facility 120, which is another example of a component that utilizes data from the commerce management engine 136 but may be located outside so as to not violate the isolation principle. The platform payment facility 120 may allow customers interacting with online stores 138 to have their payment information stored safely by the commerce management engine 136 such that they only have to enter it once. When a customer visits a different online store 138, even if they've never been there before, the platform payment facility 120 may recall their information to enable a more rapid and correct check out. This may provide a cross-platform network effect, where the e-commerce platform 100 becomes more useful to its merchants as more merchants join, such as because there are more customers who checkout more often because of the ease of use with respect to customer purchases. To maximize the effect of this network, payment information for a given customer may be retrievable from an online store's checkout, allowing information to be made available globally across online stores 138. It would be difficult and error prone for each online store 138 to be able to connect to any other online store 138 to retrieve the payment information stored there. As a result, the platform payment facility may be implemented external to the commerce management engine 136.

For those functions that are not included within the commerce management engine 136, applications 142A-B provide a way to add features to the e-commerce platform 100. Applications 142A-B may be able to access and modify data on a merchant's online store 138, perform tasks through the administrator 114, create new flows for a merchant through a user interface (e.g., that is surfaced through extensions / API), and the like. Merchants may be enabled to discover and install applications 142A-B through application search, recommendations, and support 128. In some embodiments, core products, core extension points, applications, and the administrator 114 may be developed to work together. For instance, application extension points may be built inside the administrator 114 so that core features may be extended by way of applications, which may deliver functionality to a merchant through the extension.

In some embodiments, applications 142A-B may deliver functionality to a merchant through the interface 140A-B, such as where an application 142A-B is able to surface transaction data to a merchant (e.g., App: "Engine, surface my app data in mobile and web admin using the embedded app SDK"), and/or where the commerce management engine 136 is able to ask the application to perform work on demand (Engine: "App, give me a local tax calculation for this checkout").

Applications 142A-B may support online stores 138 and channels 110A-B, provide for merchant support, integrate with other services, and the like. Where the commerce management engine 136 may provide the foundation of services to the online store 138, the applications 142A-B may provide a way for merchants to satisfy specific and sometimes unique needs. Different merchants will have different needs, and so may benefit from different applications 142A-B. Applications 142A-B may be better discovered through the e-commerce platform 100 through development of an application taxonomy (categories) that enable applications to be tagged according to a type of function it performs for a merchant; through application data services that support searching, ranking, and recommendation models; through application discovery interfaces such as an application store, home information cards, an application settings page; and the like.

Applications 142A-B may be connected to the commerce management engine 136 through an interface 140A-B, such as utilizing APIs to expose the functionality and data available through and within the commerce management engine 136 to the functionality of applications (e.g., through REST, GraphQL, and the like). For instance, the e-commerce platform 100 may provide API interfaces 140A-B to merchant and partner-facing products and services, such as including application extensions, process flow services, developer-facing resources, and the like. With customers more frequently using mobile devices for shopping, applications 142A-B related to mobile use may benefit from more extensive use of APIs to support the related growing commerce traffic. The flexibility offered through use of applications and APIs (e.g., as offered for application development) enable the e-commerce platform 100 to better accommodate new and unique needs of merchants (and internal developers through internal APIs) without requiring constant change to the commerce management engine 136, thus providing merchants what they need when they need it. For instance, shipping services 122 may be integrated with the commerce management engine 136 through a shipping or carrier service API, thus enabling the e-commerce platform 100 to provide shipping service functionality without directly impacting code running in the commerce management engine 136.

Many merchant problems may be solved by letting partners improve and extend merchant workflows through application development, such as problems associated with back-office operations (merchant-facing applications 142A-B) and in the online store 138 (customer-facing applications 142A-B). As a part of doing business, many merchants will use mobile and web related applications on a daily basis for back-office tasks (e.g., merchandising, inventory, discounts, fulfillment, and the like) and online store tasks (e.g., applications related to their online shop, for flash-sales, new product offerings, and the like), where applications 142A-B, through extension / API 140A-B, help make products easy to view and purchase in a fast growing marketplace. In some embodiments, partners, application developers, internal applications facilities, and the like, may be provided with a software development kit (SDK), such as through creating a frame within the administrator 114 that sandboxes an application interface. In some embodiments, the administrator 114 may not have control over nor be aware of what happens within the frame. The SDK may be used in conjunction with a user interface kit to produce interfaces that mimic the look and feel of the e-commerce platform 100, such as acting as an extension of the commerce management engine 136.

Applications 142A-B that utilize APIs may pull data on demand, but often they also need to have data pushed when updates occur. Update events may be implemented in a subscription model, such as for example, customer creation, product changes, or order cancelation. Update events may provide merchants with needed updates with respect to a changed state of the commerce management engine 136, such as for synchronizing a local database, notifying an external integration partner, and the like. Update events may enable this functionality without having to poll the commerce management engine 136 all the time to check for updates, such as through an update event subscription. In some embodiments, when a change related to an update event subscription occurs, the commerce management engine 136 may post a request, such as to a predefined callback URL. The body of this request may contain a new state of the object and a description of the action or event. Update event subscriptions may be created manually, in the administrator facility 114, or automatically (e.g., via the API 140A-B). In some embodiments, update events may be queued and processed asynchronously from a state change that triggered them, which may produce an update event notification that is not distributed in real-time.

In some embodiments, the e-commerce platform 100 may provide application search, recommendation and support 128. Application search, recommendation and support 128 may include developer products and tools to aid in the development of applications, an application dashboard (e.g., to provide developers with a development interface, to administrators for management of applications, to merchants for customization of applications, and the like), facilities for installing and providing permissions with respect to providing access to an application 142A-B (e.g., for public access, such as where criteria must be met before being installed, or for private use by a merchant), application searching to make it easy for a merchant to search for applications 142A-B that satisfy a need for their online store 138, application recommendations to provide merchants with suggestions on how they can improve the user experience through their online store 138, a description of core application capabilities within the commerce management engine 136, and the like. These support facilities may be utilized by application development performed by any entity, including the merchant developing their own application 142A-B, a third-party developer developing an application 142A-B (e.g., contracted by a merchant, developed on their own to offer to the public, contracted for use in association with the e-commerce platform 100, and the like), or an application 142A or 142B being developed by internal personal resources associated with the e-commerce platform 100. In some embodiments, applications 142A-B may be assigned an application identifier (ID), such as for linking to an application (e.g., through an API), searching for an application, making application recommendations, and the like.

The commerce management engine 136 may include base functions of the e-commerce platform 100 and expose these functions through APIs 140A-B to applications 142A-B. The APIs 140A-B may enable different types of applications built through application development. Applications 142A-B may be capable of satisfying a great variety of needs for merchants but may be grouped roughly into three categories: customer-facing applications, merchant-facing applications, integration applications, and the like. Customer-facing applications 142A-B may include online store 138 or channels 110A-B that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications 142A-B may include applications that allow the merchant to administer their online store 138 (e.g., through applications related to the web or website or to mobile devices), run their business (e.g., through applications related to POS devices), to grow their business (e.g., through applications related to shipping (e.g., drop shipping), use of automated agents, use of process flow development and improvements), and the like. Integration applications may include applications that provide useful integrations that participate in the running of a business, such as shipping providers 112 and payment gateways.

In some embodiments, an application developer may use an application proxy to fetch data from an outside location and display it on the page of an online store 138. Content on these proxy pages may be dynamic, capable of being updated, and the like. Application proxies may be useful for displaying image galleries, statistics, custom forms, and other kinds of dynamic content. The core-application structure of the e-commerce platform 100 may allow for an increasing number of merchant experiences to be built in applications 142A-B so that the commerce management engine 136 can remain focused on the more commonly utilized business logic of commerce.

The e-commerce platform 100 provides an online shopping experience through a curated system architecture that enables merchants to connect with customers in a flexible and transparent manner. A typical customer experience may be better understood through an embodiment example purchase workflow, where the customer browses the merchant's products on a channel 110A-B, adds what they intend to buy to their cart, proceeds to checkout, and pays for the content of their cart resulting in the creation of an order for the merchant. The merchant may then review and fulfill (or cancel) the order. The product is then delivered to the customer. If the customer is not satisfied, they might return the products to the merchant.

In an example embodiment, a customer may browse a merchant's products on a channel 110A-B. A channel 110A-B is a place where customers can view and buy products. In some embodiments, channels 110A-B may be modeled as applications 142A-B (a possible exception being the online store 138, which is integrated within the commence management engine 136). A merchandising component may allow merchants to describe what they want to sell and where they sell it. The association between a product and a channel may be modeled as a product publication and accessed by channel applications, such as via a product listing API. A product may have many options, like size and color, and many variants that expand the available options into specific combinations of all the options, like the variant that is extra-small and green, or the variant that is size large and blue. Products may have at least one variant (e.g., a "default variant" is created for a product without any options). To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Products may be viewed as 2D images, 3D images, rotating view images, through a virtual or augmented reality interface, and the like.

In some embodiments, the customer may add what they intend to buy to their cart (in an alternate embodiment, a product may be purchased directly, such as through a buy button as described herein). Customers may add product variants to their shopping cart. The shopping cart model may be channel specific. The online store 138 cart may be composed of multiple cart line items, where each cart line item tracks the quantity for a product variant. Merchants may use cart scripts to offer special promotions to customers based on the content of their cart. Since adding a product to a cart does not imply any commitment from the customer or the merchant, and the expected lifespan of a cart may be in the order of minutes (not days), carts may be persisted to an ephemeral data store.

The customer then proceeds to checkout. A checkout component may implement a web checkout as a customer-facing order creation process. A checkout API may be provided as a computer-facing order creation process used by some channel applications to create orders on behalf of customers (e.g., for point of sale). Checkouts may be created from a cart and record a customer's information such as email address, billing, and shipping details. On checkout, the merchant commits to pricing. If the customer inputs their contact information but does not proceed to payment, the e-commerce platform 100 may provide an opportunity to re-engage the customer (e.g., in an abandoned checkout feature). For those reasons, checkouts can have much longer lifespans than carts (hours or even days) and are therefore persisted. Checkouts may calculate taxes and shipping costs based on the customer's shipping address. Checkout may delegate the calculation of taxes to a tax component and the calculation of shipping costs to a delivery component. A pricing component may enable merchants to create discount codes (e.g., 'secret' strings that when entered on the checkout apply new prices to the items in the checkout). Discounts may be used by merchants to attract customers and assess the performance of marketing campaigns. Discounts and other custom price systems may be implemented on top of the same platform piece, such as through price rules (e.g., a set of prerequisites that when met imply a set of entitlements). For instance, prerequisites may be items such as "the order subtotal is greater than $100" or "the shipping cost is under $10", and entitlements may be items such as "a 20% discount on the whole order" or "$10 off products X, Y, and Z".

Customers then pay for the content of their cart resulting in the creation of an order for the merchant. Channels 110A-B may use the commerce management engine 136 to move money, currency or a store of value (such as dollars or a cryptocurrency) to and from customers and merchants. Communication with the various payment providers (e.g., online payment systems, mobile payment systems, digital wallet, credit card gateways, and the like) may be implemented within a payment processing component. The actual interactions with the payment gateways 106 may be provided through a card server environment. In some embodiments, the payment gateway 106 may accept international payment, such as integrating with leading international credit card processors. The card server environment may include a card server application, card sink, hosted fields, and the like. This environment may act as the secure gatekeeper of the sensitive credit card information. In some embodiments, most of the process may be orchestrated by a payment processing job. The commerce management engine 136 may support many other payment methods, such as through an offsite payment gateway 106 (e.g., where the customer is redirected to another website), manually (e.g., cash), online payment methods (e.g., online payment systems, mobile payment systems, digital wallet, credit card gateways, and the like), gift cards, and the like. At the end of the checkout process, an order is created. An order is a contract of sale between the merchant and the customer where the merchant agrees to provide the goods and services listed on the orders (e.g., order line items, shipping line items, and the like) and the customer agrees to provide payment (including taxes). This process may be modeled in a sales component. Channels 110A-B that do not rely on commerce management engine 136 checkouts may use an order API to create orders. Once an order is created, an order confirmation notification may be sent to the customer and an order placed notification sent to the merchant via a notification component. Inventory may be reserved when a payment processing job starts to avoid over-selling (e.g., merchants may control this behavior from the inventory policy of each variant). Inventory reservation may have a short time span (minutes) and may need to be very fast and scalable to support flash sales (e.g., a discount or promotion offered for a short time, such as targeting impulse buying). The reservation is released if the payment fails. When the payment succeeds, and an order is created, the reservation is converted into a long-term inventory commitment allocated to a specific location. An inventory component may record where variants are stocked, and tracks quantities for variants that have inventory tracking enabled. It may decouple product variants (a customer facing concept representing the template of a product listing) from inventory items (a merchant facing concept that represent an item whose quantity and location is managed). An inventory level component may keep track of quantities that are available for sale, committed to an order or incoming from an inventory transfer component (e.g., from a vendor).

The merchant may then review and fulfill (or cancel) the order. A review component may implement a business process merchant's use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) and mark the order as paid. The merchant may now prepare the products for delivery. In some embodiments, this business process may be implemented by a fulfillment component. The fulfillment component may group the line items of the order into a logical fulfillment unit of work based on an inventory location and fulfillment service. The merchant may review, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. A custom fulfillment service may send an email (e.g., a location that doesn't provide an API connection). An API fulfillment service may trigger a third party, where the third-party application creates a fulfillment record. A legacy fulfillment service may trigger a custom API call from the commerce management engine 136 to a third party (e.g., fulfillment by Amazon). A gift card fulfillment service may provision (e.g., generating a number) and activate a gift card. Merchants may use an order printer application to print packing slips. The fulfillment process may be executed when the items are packed in the box and ready for shipping, shipped, tracked, delivered, verified as received by the customer, and the like.

If the customer is not satisfied, they may be able to return the product(s) to the merchant. The business process merchants may go through to "un-sell" an item may be implemented by a return component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees, or goods that weren't returned and remain in the customer's hands); and the like. A return may represent a change to the contract of sale (e.g., the order), and where the e-commerce platform 100 may make the merchant aware of compliance issues with respect to legal obligations (e.g., with respect to taxes). In some embodiments, the e-commerce platform 100 may enable merchants to keep track of changes to the contract of sales over time, such as implemented through a sales model component (e.g., an append-only date-based ledger that records sale-related events that happened to an item).

### Analysing messages in an e-commerce platform

As outlined above, fulfilling an order for a product placed by a customer can include facilitating the shipment of the product to the customer. A merchant may arrange this shipment by purchasing a shipping label through the shipping providers 112, for example. Alternatively, a third party may facilitate the shipment of the product. The customer may be provided with the shipping information for the shipment, which can include, *inter alia, a* shipping provider, a tracking number, a tracking URL, a shipment status and/or an expected delivery date. This shipping information could be provided to the user through a message, such as an email message, a text or short message service (SMS) message, or an instant message, for example. In some implementations, product information-i.e., information about products included in the shipment, may, additionally or alternatively, be included in shipment information (e.g., to allow a buyer to identify a particular shipment). The messaging service used to deliver the message may be supported by the e-commerce platform 100. For example, the e-commerce platform 100 may support an email messaging service to communicate with customers and/or merchants and to facilitate the delivery of shipping information to customers. The messaging service may also or instead be supported by a third party.

Messages that provide shipping information to a customer may be difficult and/or time consuming for the customer to organize. Notably, messages providing shipping information may be stored amongst a plurality of messages. For example, email messages that provide shipping information may become buried in a customer's inbox, making it difficult for the customer to later locate the message when the shipping information is needed. In another example, due to the lack of a unified inbox for messages of different types (e.g., SMS, email, chat/IM, etc.) and/or multiple inboxes of a given type (e.g., due to multiple telephone numbers for SMS or multiple email accounts/addresses for email) such messages may be spread across one or more inboxes of one or more types and may thus be difficult to locate. Accordingly, a need exists for a computer-implemented system for obtaining and consolidating shipping information from a customer's (user's) messages.

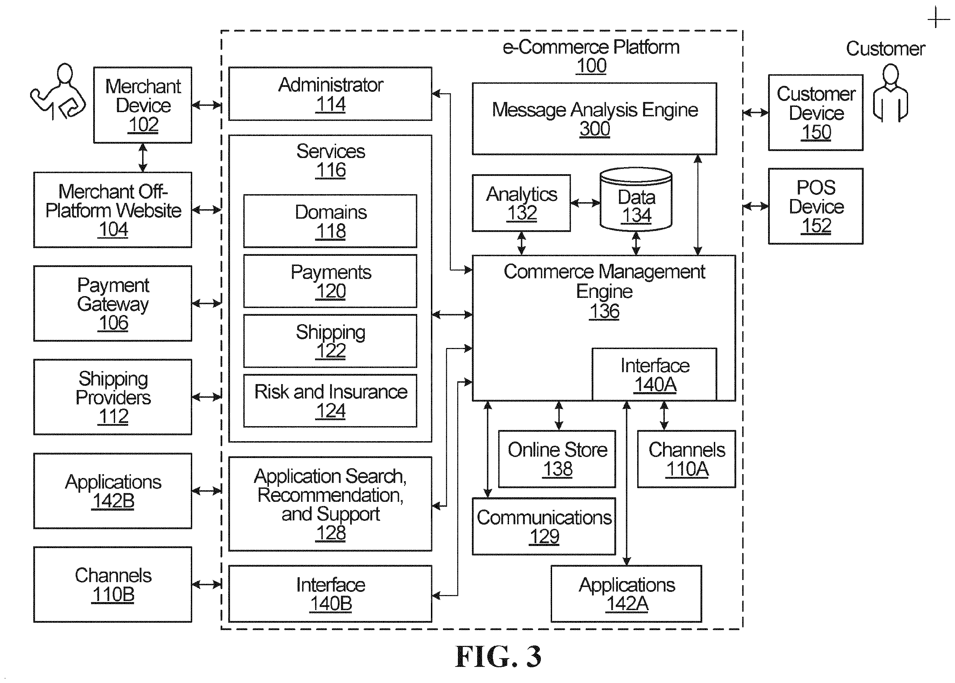

FIG. 3 illustrates the e-commerce platform 100 of FIG. 1, but including a message analysis engine 300. The message analysis engine 300 is an example of a computer-implemented system for obtaining shipping information from a message and storing the shipping information. By way of example, when a customer receives an email message related to tracking a shipment, the message analysis engine 300 could extract shipping information from the email message and add that shipping information to an aggregated summary of all product shipments for the customer. This summary can then be accessed by the customer through their account on the e-commerce platform 100, allowing the customer to quickly and easily review the shipping provider, tracking number, tracking URL, shipment status and/or expected delivery date for each of their shipments. The customer might be able to avoid viewing each email message individually to obtain the shipping information. Thus, the aggregated summary of shipping information saves time and effort for the customer, and is particularly useful for customers that shop from a multitude of online stores and have many product shipments pending simultaneously.

It should be noted that the message analysis engine 300 is not limited to obtaining shipping information from messages. Other types of information could also or instead be obtained from messages. For example, the message analysis engine 300 could obtain and store (and, potentially, aggregate) transactional data, billing information, information on products purchased, information on services rendered, and any other information associated with business through the e-commerce platform 100.

Although the message analysis engine 300 is illustrated as a distinct component of the e-commerce platform 100 in FIG. 3, this is only an example. A message analysis engine could also or instead be provided by another component of the e-commerce platform 100 or offered as a stand-alone component or service that is external to the platform 100. In some embodiments, the commerce management engine 136 and/or the applications 142A provide a message analysis engine. The e-commerce platform 100 could include multiple message analysis engines that are provided by one or more parties. The multiple message analysis engines could be implemented in the same way, in similar ways and/or in distinct ways. In addition, at least a portion of a message analysis engine could be implemented on the customer device 150. For example, the customer device 150 could store and run the message analysis engine locally as a software application.

The message analysis engine 300 could implement at least some of the functionality described herein. Although the embodiments described below may be implemented in association with an e-commerce platform, such as (but not limited to) the e-commerce platform 100, the embodiments described below are not limited to the specific e-commerce platform 100 of FIGs. 1 to 3. Further, the embodiments described herein do not necessarily need to be implemented in association with or involve an e-commerce platform at all. Other computing platforms and devices could implement at least some of the systems and methods disclosed herein.

### Obtaining shipping information from messages

Accurately and consistently obtaining shipping information from a message can be difficult. There exist a vast number of shipping providers, fulfillment networks, postal service providers, last-mile delivery services, and the like that can be employed to ship a product to a customer. Each merchant and/or shipping provider typically has its own message formats and tracking number systems. Further, digital notifications may take a variety of forms/be of a variety of types such as, for example, email messages, text messages, instant messages, or the like. Furthermore, a set of messages, whether of the same or different types, may all have different formats. As a result, the number of potential message formats that may contain shipping information is immense.

Implementing deterministic methods for obtaining shipping information from a message might not be feasible for this number of potential message formats. Deterministic methods often use a fixed set of rules to extract shipping information from a message. However, to be both accurate and consistent, deterministic methods for obtaining shipping information from messages should be actively configured to handle each possible message format. For example, deterministic methods might require a distinct set of rules or templates to be generated for pattern-matching every individual message format. The number of possible message formats would render this excessively time-consuming. Additionally, there has been no consistently adopted format for tracking messages of various types. Further, attempts at such standardization have seen only limited adoption and, in such limited adoption, such standards are often implemented inconsistently/incorrectly. Furthermore, shipping providers are constantly updating and altering their email message formats, and new shipping providers, delivery services and the like are coming online (i.e., starting up their businesses) frequently as well. Therefore, deterministic methods for obtaining shipping information from messages would also need to be actively updated accordingly.

Obtaining shipping information from tracking URLs in a message, rather than from the entire content of the message, can help avoid at least some use of the deterministic methods outlined above. A tracking URL can direct to a web resource that includes the shipping information for a particular shipment. While a URL might represent only a fraction of the total content of a message, the URL itself may still provide most or even all of the shipping information contained in the message. Therefore, a tracking URL may be used to obtain shipping information without parsing the entire content of a message. URLs also have a predefined structure that may simplify the analysis for obtaining shipping information. The structure of a URL includes a scheme, an optional authority, a path, an optional query and an optional fragment.

Schemes include a string of characters followed by a colon (:) that indicate the web protocol being used. Non-limiting examples of schemes include *http, https, ftp, mailto, file, data,* and *irc.*

An authority in a URL is preceded by two slashes (//). An authority can include an optional *userinfo* subcomponent that provides a username and optionally a password, a *host* subcomponent and an optional *port* subcomponent.

A path can provide a map to a particular web resource, file or directory on a server. A path may include one or more path segments, where each path segment is separated by a slash (/). However, a path might instead be empty.

A query is preceded by a question mark (?) in a URL and includes one or more parameters. Each parameter is separated by an ampersand (&). The query can dictate the content that is provided by a web resource. For example, the query may be used to select the content that is displayed on a webpage.

A fragment is preceded by a hash (#) and can provide direction to a secondary web resource.

Accordingly, the structure of a URL can be defined as *scheme*:[//*authority*]*path*[*?query*][*#fragment*]*.* Consider, for example, the following URL: *https:*//*soup.myshopify.com*/*pages*/*recipes?param1 =x&param2 =y#borscht.* Here, the scheme is *https,* the authority is *soup.myshopify.com,* the path is *pages*/*recipes,* the query is *paraml =x&param2=y,* and the fragment is *borscht.*

The structured nature and relatively short length of URLs, at least compared to the entire content of a message, allows for the use of probabilistic methods to obtain shipping information. Probabilistic methods make decisions based on probability distributions and are generally well suited to problems involving a large number of unique inputs and corresponding concrete outputs, which can be the case for obtaining shipping information from messages. Probabilistic methods can provide a degree of flexibility to accommodate many different message formats and changes to message formats.

In some embodiments, probabilistic methods extract shipping information from a URL by recognising specific parameters or syntax in the URL. For example, query parameters in a URL might be *country=CA&trackingld=368927473835,* indicating that the destination of the shipment is in Canada and the tracking number is 368927473835.

Machine learning (ML) models are one potential way to implement probabilistic methods. However, ML models can be computationally intensive and may require a large amount of data to train. Therefore, analysing large input data sets can be costly and time-consuming using ML models. Advantageously, URLs often have a relatively small number of characters (typically between 50 and 200), are well-structured, and may typically change less frequently than message formats (e.g., in at least some cases changes to URL formats may be limited due to a need to maintain backwards compatibility in the URL format, whereas the format of messages such as the format of email bodies may change more frequently such as, for example, for stylistic reasons), and are therefore well suited to analysis using ML models.

In addition to obtaining shipping information from a URL, shipping information can also be obtained from the web resource that is linked to by, or otherwise associated with, the URL. For example, a URL may link to a webpage of a shipping provider that provides the shipping provider, tracking number, shipment status and/or expected delivery date of a shipment. Shipping information can be obtained by parsing a web resource using deterministic methods and/or probabilistic methods.

Analysing both a URL and a web resource associated with a URL can potentially increase the amount of shipping information that is obtained from a message and/or provide a degree of redundancy in obtaining the shipping information. For example, the shipping information obtained from a URL can be confirmed and/or supplemented by shipping information obtained from a web resource associated with the URL, and vice versa. In one example, a URL extracted from a message is analysed to determine if the URL is for tracking a shipment, determine a shipping provider for the shipment, and/or determine a tracking number for the shipment. The shipping information obtained from the URL may then be supplemented and/or confirmed with shipping information obtained from a web resource associated with the URL. In another example, shipping information is determined from a web resource associated with a URL, and the shipping information is optionally confirmed through analysis of the URL.

After obtaining shipping information from one or more of a user's messages, a consolidated list of the shipping information may be compiled for the customer. This list allows a user to quickly and easily access information on any, some or all of their pending shipments at once. The list of shipping information may be actively updated as the user receives new messages with shipping information and as shipments are successfully delivered to the user, for example. Further, the user could be given the ability to alter the list. For example, the user may be able to organize, add, delete and/or modify shipping information in the list.

Shipping information is only one type of information that can be obtained from a user's messages using the systems and methods disclosed herein. The present disclosure also relates to obtaining other types of information from a user's messages. For example, information regarding the products purchased online by a user can be obtained from the user's messages. Analysing the URLs in these messages, and optionally the web resources that are associated with those URLs, can be implemented to obtain product information for the products that the user has ordered online. Compiling this product information can allow product recommendations from one commerce platform to incorporate the user's purchases from other commerce platforms, for example. In another example, other potentially relevant data such as, for example, information may be obtained about future shipments could be obtained based on an analysis of URLs in a user's messages. Notably, such potentially relevant data could include product data/information related to upcoming shipments. Additionally or alternatively, in at least some cases, such potentially relevant information may include information not available in the user's messages/that will not be communicated to the user via a message. Additionally or alternatively, in at least some cases, potentially relevant information may include information that is present in messages but that is not shown when the message is rendered. For example, potentially relevant information may be found in metadata / mark-up included in a message. In another example, potentially relevant information may not be visible when a message is rendered by certain categories of devices/clients (e.g., information visible only when a message is rendered on a desktop computer but not when a message is rendered for presentation on a mobile device).

### Example systems and methods for obtaining shipping information from messages

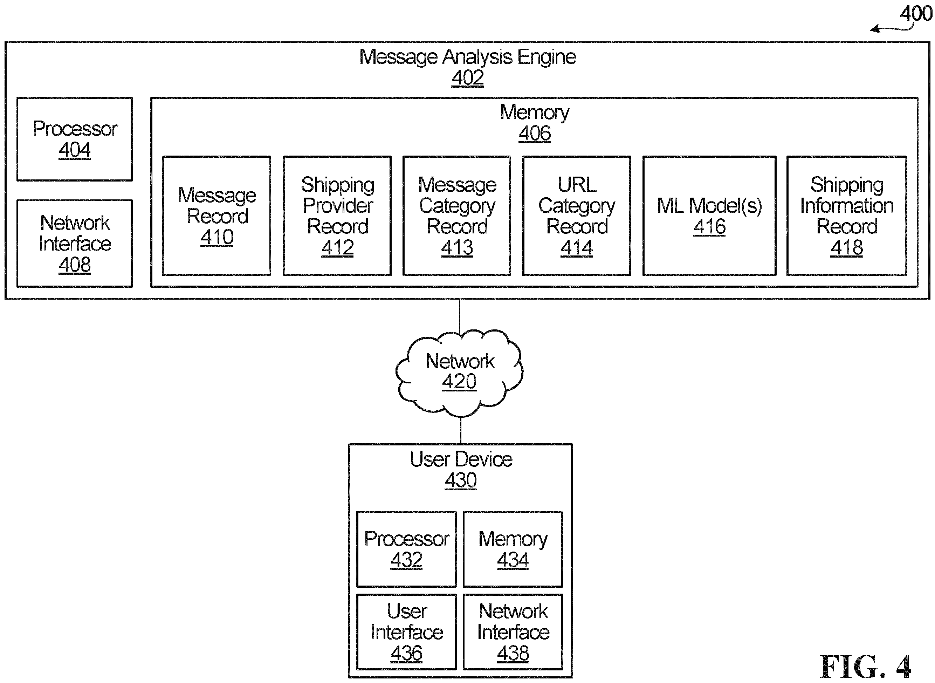

FIG. 4 is a block diagram illustrating an example system 400 for obtaining information from digital messages. The system 400 includes a message analysis engine 402, a network 420, and a user device 430.

The message analysis engine 402 stores and analyses messages to obtain information from the messages. The obtained information can then be compiled and stored by the message analysis engine 402, and optionally transmitted to the user device 430. While the information obtained by the message analysis engine 402 might be or include shipping information, other types of information are also contemplated. For example, information regarding the products purchased online by a user can be obtained by the message analysis engine 402.

The location of the message analysis engine 402 is implementation specific. In some implementions, the message analysis engine 402 is provided at least in part by an e-commerce platform, either as a core function of the e-commerce platform or as an application supported by the e-commerce platform. For example, the message analysis engine 402 could be the message analysis engine 300 of FIG. 3. In some implementations, the message analysis engine 402 is implemented as a stand-alone component, application or service that is external to the e-commerce platform or that is implemented at least in part by a user device. Other implementations of the message analysis engine 402 are also contemplated. While the message analysis engine 402 is shown as a single component, the message analysis engine 402 could instead be provided by multiple different components that are in communication via the network 420, for example.

The message analysis engine 402 includes a processor 404, memory 406 and a network interface 408. The processor 404 may be implemented by one or more processors that execute instructions stored in the memory 406 or in another non-transitory computer-readable medium. These instructions could implement any method described herein. Alternatively, some or all of the processor 404 may be implemented using dedicated circuitry, such as an application specific integrated circuit (ASIC), a graphics processing unit (GPU) or a programmed field programmable gate array (FPGA).

The network interface 408 is provided for communication over the network 420. The structure of the network interface 408 is implementation specific. For example, the network interface 408 may include a network interface card (NIC), a computer port (e.g., a physical outlet to which a plug or cable connects), and/or a network socket.

The memory 406 stores a message record 410, a shipping provider record 412, message category record 413, a URL category record 414, one or more ML model(s) 416, and a shipping information record 418.

The message record 410 includes messages that are being stored for analysis by the message analysis engine 402. These messages may include email messages, text messages, instant messages and the like. Audio messages, such as voice mail messages and messages from digital assistants, for example, can also be included in the message record 410. In some cases, a serialized version of a message is stored in the message record 410. An example of a serialized version of a message is an EML file for an email message.

Messages may be only temporarily stored in the message record 410 before and/or during analysis by the message analysis engine 402. However, the message record 410 could also provide a permanent or semi-permanent record of the messages.

The messages stored in the message record 410 could be obtained in any of a number of different ways. In some implementations, the message analysis engine 402 is granted access to one or more user accounts on a messaging service. This access can allow the message analysis engine 402 to obtain user messages from the messaging service. Non-limiting examples of messaging services include email services, text messaging services and instant messaging services. Further, a user may grant the message analysis engine 402 access to their accounts on multiple messaging services. Thus, the message analysis engine 402 could obtain a user's messages from one or more email accounts, one or more text messaging accounts, and/or one or more instant messaging accounts.

Once the message analysis engine 402 has access to a user's account on a messaging service, any, some or all of the user's messages on that messaging service can be stored in the message record 410. The messages could be received from a server supporting the messaging service and/or from a user device (for example, the user device 430). In some cases, as the user receives new messages on the messaging service, the message record 410 may also obtain and store the new messages. Thus, the message record 410 may include a consolidated list of the messages a user receives on one or more messaging platforms. In some cases, the user actively selects which messages are stored in the message record 410 and/or defines a set of rules that determine which messages are stored in the message record 410. For example, the user could configure the access of the message analysis engine 402 such that only messages from certain senders are stored in the message record 410.

The shipping provider record 412 includes a list or set of known shipping providers. In some cases this list may be automatically built or maintained such as, for example, based on information obtained from one or more data sources. Information regarding each of these shipping providers can also be stored in the shipping provider record 412, including shipping message formats used by the shipping provider, tracking URL formats used by the shipping provider and/or web resource formats used by the shipping provider, for example. As discussed in further detail elsewhere herein, the shipping provider record 412 can be used to help obtain and/or confirm shipping information from a message.

The message category record 413 includes a list or set of predefined message categories. At least some of these predefined message categories may correspond to different message formats, templates or structures, for example.

In some implementations, the predefined message categories in the message category record 413 are defined based (at least in part) on the potential function of a message. Accordingly, determining the message category of a message may help determine the function of a message. Non-limiting examples of such predefined message categories include:
- commerce messages, including merchant advertisements, newsletters and other promotional content, for example;
- shipment tracking and/or confirmation messages;
- delivery status update messages;
- order confirmation messages;
- personal messages;
- work messages;
- bills; and
- spam messages.

The predefined message categories in the message category record 413 may also or instead be defined based (at least in part) on the sender of a message. Different merchants, shipping providers and other senders may have their sending addresses and/or their own message formats, each or both of which may, taken alone or in combination, correspond to a respective message category in the message category record 413. In an example, multiple shipment tracking message categories could be defined, where each category corresponds to a different shipping provider defined in the shipping provider record 412.

In some implementations, the message category record 413 can help identify messages that may potentially include shipping information and can even help determine at least some of the shipping information in the messages. For example, it may be determined that a particular message corresponds to a certain predefined message category. If this predefined message category is associated with shipment tracking, then it may be determined that the message is also associated with shipment tracking. Further, if the message category is associated with a particular shipping provider, then it may be determined that the shipment is being facilitated by that shipping provider.

The URL category record 414 includes a list or set of predefined URL categories. Each of these predefined URL categories may correspond to a different URL format, template or structure, for example. These predefined URL categories can be used to help determine the function of a URL and/or the function of the web resource that is linked to by the URL. In other words, by matching a particular URL to one of the predefined URL categories stored in the URL category record 414, the purpose of the web resource that is linked to by the URL may be determined.

In some implementations, at least one of the predefined URL categories stored in the URL category record 414 is a tracking URL category or is otherwise related to tracking shipments. The URL category record 414 may include multiple tracking URL categories, where each of the tracking URL categories may be specific to a respective shipping provider. For example, URL formats that are used by a particular shipping provider can fall into one or more tracking URL categories that are specific to that shipping provider. In some cases, the URL category record 414 is correlated with the shipping provider record 412 such that each shipping provider in the shipping provider record 412 has one or more corresponding URL categories defined in the URL category record 414. However, multiple different shipping providers could use URLs with similar formats. Additionally, in some cases, a URL may correspond to a shipping information aggregator from which shipping information may be obtained even though that aggregator may not be responsible for handling of the actual shipment/delivery of a shipment. As such, a tracking URL category may be associated with multiple different shipping providers. There may also be one or more predefined URL categories in the URL category record 414 that are not related to shipment tracking.

As discussed in further detail elsewhere herein, storing predefined URL categories in the URL category record 414 can help determine shipping information from a URL. If it is determined that a URL corresponds to a tracking URL category associated with a particular shipping provider, then it can be inferred that the URL is related to tracking a shipment facilitated by that shipping provider. Having knowledge of the tracking URL category may also allow the tracking number to be extracted from the URL. In an example, a particular tracking URL category corresponds to a URL format that includes a tracking number. The tracking number is generally included at the same position in the URL format. As such, a start index and an end index can be defined for tracking numbers of that tracking URL category and stored in the URL category record 414. The start index corresponds to the position of the first digit of the tracking number, and the end index corresponds to the position of the last digit of the tracking number. Using the start index and the end index, a tracking number can be extracted from URLs of this tracking URL category. The start index and/or the end index can be defined from the beginning of the URL or from the end of the URL. In other words, finding the start and/or the end of a tracking number in a URL can involve counting forwards from the beginning of the URL or counting backwards from the end of the URL.

The ML model(s) 416 are executable by the processor 404 to analyse messages and to obtain information (such as shipping information, for example) from the messages. In some cases, the ML model(s) 416 implement probabilistic methods for obtaining information from a message.

The ML model(s) 416 could be implemented using any form or structure known in the art. Example structures for the ML model(s) 416 include but are not limited to:
- one or more artificial neural network(s);
- one or more decision tree(s);
- one or more support vector machine(s);
- one or more Bayesian network(s); and/or
- one or more genetic algorithm(s).

The methods used to train the ML model(s) 416 are also implementation specific and are not limited herein. Non-limiting examples of training methods include:
- supervised learning;
- unsupervised learning;
- reinforcement learning;
- self-learning;
- feature learning; and
- sparse dictionary learning.

According to some embodiments, one or more of the ML model(s) 416 are trained using supervised learning. In supervised learning, training is performed by analyzing input data in a training data set, making quantitative comparisons, and cross-referencing conclusions with a known result in the training data set. Iterative refinement of these analyses and comparisons allows an ML model to achieve greater certainty between the result predicted by the ML model and the known result. This process is continued iteratively until the solution converges or reaches a desired accuracy.

According to some embodiments, one or more of the ML model(s) 416 are trained using unsupervised learning. In unsupervised learning, an ML model determines and draws its own connections from a training data set. This can be done by looking into naturally occurring data relationships or patterns in the training data set. One method for implementing unsupervised learning is cluster analysis, in which the goal is to discover groups or clusters within the training data set. A cluster is a set of variables that are treated similarly by an ML model. In cluster analysis, the ML model will subdivide the training data set to determine clusters that have high intra-group similarities and low inter-group similarities. The number of clusters used in a cluster analysis may be configurable in the ML model.

Any, one, some or all of the ML model(s) 416 may be or include a multi-task learning (MTL) model. An MTL model may help to extract information from a message more accurately and/or efficiently by performing multiple tasks simultaneously. For example, determining whether or not a URL in a message is related to tracking a shipment, determining a shipping provider for the shipment, determining a tracking number for the shipment, and determining a merchant that initiated the shipment can all be considered "tasks" that may be solved by a single MTL model. The commonalities and differences between these tasks can help improve the overall accuracy of the MTL model compared to multiple ML models that are implemented to solve each task separately. The MTL models can be trained to improve results across all tasks simultaneously to provide an improved collective answer, rather than improving the results of each task individually, which gives improved individual answers that may not be correct or coherent as a collective. Moreover, implementing a single MTL model instead of multiple ML models can reduce the overall number of ML models that need to be trained and maintained.

The shipping information record 418 includes shipping information that has been obtained for one or more users. This shipping information could be determined from the messages stored in the message record 410 using the ML model(s) 416 and/or the methods disclosed elsewhere herein. However, shipping information could also be obtained from other sources, such as via direct user input on the user device 430, for example. In some implementations, the shipping information record 418 compiles or otherwise provides a consolidated list of the shipping information for one or more users. The list of shipping information can be actively updated. In one example, when a shipment is received by a user, the shipping information corresponding to this shipment can be removed from the shipping information record 418. In another example, when a new message is obtained by the message record 410 and shipping information is obtained from this message, then the shipping information can be added to the shipping information record 418.

Although the message record 410, the shipping provider record 412, the message category record 413, the URL category record 414 and the shipping information record 418 are shown separately in FIG. 4, it should be noted that two or more of these records could instead be combined into a single record in some embodiments. In one example, the message record 410 and the shipping information record 418 could be combined into a single record. In another example, the shipping provider record 412, the message category record 413 and the URL category record 414 could be combined into a single record.

The user device 430 includes a processor 432, memory 434, user interface 436 and network interface 438. The user interface 436 can include, for example, a display screen (which may be a touch screen), a gesture recognition system, a speaker, headphones, a microphone, haptics, a keyboard, and/or a mouse. The network interface 438 is provided for communicating over the network 420. The structure of the network interface 438 will depend on how the user device 430 interfaces with the network 420. For example, if the user device 430 is a mobile phone, headset or tablet, then the network interface 438 may include a transmitter/receiver with an antenna to send and receive wireless transmissions to/from the network 420. If the user device is a personal computer connected to the network with a network cable, then the network interface 438 may include, for example, a NIC, a computer port, and/or a network socket. The processor 432 directly performs or instructs all of the operations performed by the user device 430. Examples of these operations include processing user inputs received from the user interface 436, preparing information for transmission over the network 420, processing data received over the network 420, and instructing a display screen to display information. The processor 432 may be implemented by one or more processors that execute instructions stored in the memory 434. Alternatively, some or all of the processor 432 may be implemented using dedicated circuitry, such as an ASIC, a GPU, or a programmed FPGA.

In FIG. 4, one user device is shown by way of example. More than one user device may be in communication with the message analysis engine 402.

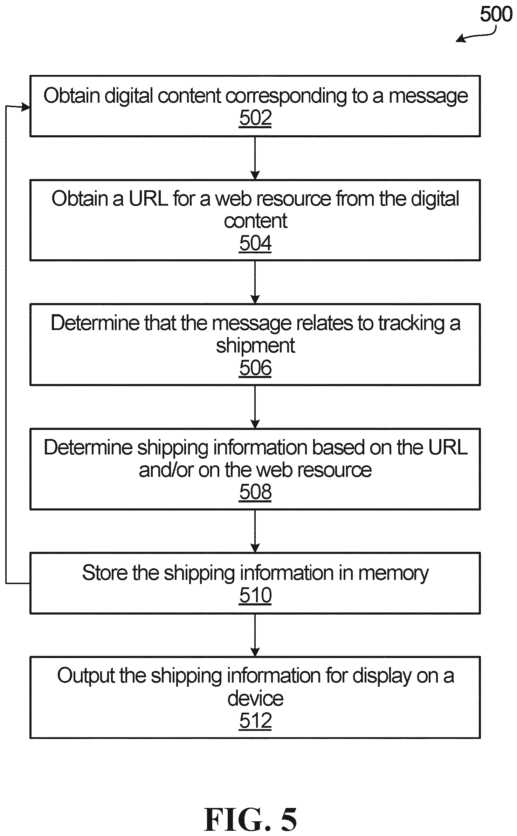

FIG. 5 is a flow diagram illustrating a method 500 for analysing messages to obtain shipping information. The method 500 will be described as being performed by the message analysis engine 402 of FIG. 4. However, other implementations are also contemplated. For example, the method 500 could be performed in whole or in part by the user device 430.

The method may include identifying a plurality of messages associated with a customer. Shipping information for at least one shipment can be extracted from the plurality of messages. Step 502 includes the processor 404 obtaining digital content corresponding to a given message. The message could be one of the plurality of the identified messages. This digital content could include any, some or all of the content in the message (for example, the headings, text and/or attachments of the message), the sender of the message and/or the recipient(s) of the message, for example. In some cases, a serialized version of the message is obtained in step 502. The digital content may be obtained from the message record 410, from the user device 430 and/or from a server hosting a messaging service, for example.

Step 504 includes the processor 404 obtaining one or more URLs from the digital content obtained in step 502. Each URL is associated with a web resource. The URLs may be visible to a user reading or otherwise engaging with the message (for example, be a hyperlink shown in text) or be non-visible to a user (for example, be metadata or invisible hypertext markup language (HTML) elements). In general, any, one, some or all URLs in the digital content can be obtained in step 504. If no URLs are found in the digital content, then the method 500 may end.

Step 504 may be performed using any of a variety of techniques. In some cases, step 504 may implement deterministic methods such as string-matching algorithms to extract URLs. For example, the processor 404 can parse the digital content and remove any strings that include URL-specific syntax. Non-limiting examples of URL-specific syntax include *http:, .html, .com, .org* and *.ca.* Probabilistic methods may also or instead be implemented in step 504. For example, one or more of the ML model(s) 416 may be trained to extract URLs from the digital content.

The URLs extracted from the message in step 504 may be stored in the memory 406 or another non-transitory computer-readable medium. For example, the extracted URLs can be stored along with the message in the message record 410.

Step 506 is an optional step that includes the processor 404 determining, based on the digital content obtained in step 502, that the message relates to (or possibly relates to) tracking a shipment. This step informs the message analysis engine 402 that the message should be processed further using the method 500 to obtain shipping information. If, on the other hand, step 506 determines that the message is not related to tracking a shipment, then the method 500 might end. As such, step 506 can help filter the number of messages that are processed by the method 500.

In some implementations, step 506 includes categorizing the message and determining that the message category is associated with shipment tracking. For example, step 506 may include inputting the digital content into an ML model (which may be one of the ML model(s) 416) that has been trained to identify a message category from the digital content of a message. This ML model can then output a message category, or at least an indication of the message category, for the message. In some cases, the ML model may select the message category from the set of predefined message categories stored in the message category record 413. Based on the message category determined by the ML model, it can be determined whether or not the message relates to the shipment. For example, shipment tracking messages and order confirmation messages may be defined as message categories that can relate to the shipment of a product.

An ML model that is used to identify a message category from the digital content of a message can be trained in any of a number of different ways. In some implementations, a training data set for this ML model can include a set of messages, each labelled with a known message category. This training data set can be obtained from user feedback on a computing platform. For example, when a user encounters a problem with a message on a computing platform, they can report the problem. In the report, the user may be asked to submit the message and indicate a category for the message. The category for the message could be selected from one of the predefined categories stored in the message category record 413. Accordingly, these reports can provide a large set of messages that have been categorized by users and may therefore provide a suitable training data set for the ML model.

In some implementations, step 506 uses a URL obtained in step 504, in addition to or instead of the entire digital content of the message, to determine that the message relates to shipment tracking. In these implementations, step 506 may include inputting at least a portion of the URL into an ML model that has been trained to identify a URL category. This ML model may be one of the ML model(s) 416. If the URL category corresponds to shipment tracking, then it may be determined that the message itself also relates to shipment tracking. In some cases, the ML model may select the URL category from the set of predefined URL categories stored in the URL category record 414.

An ML model that is used to identify a URL category from a URL can be trained using a training data set acquired through user feedback on a computing platform. For example, when a merchant is fulfilling a customer order on an e-commerce platform, the merchant can provide a URL for tracking the shipment of the order. As such, the URLs provided by the merchant in these situations can be categorized as being related to shipment tracking. These URLs, as well as other URLs that are not related to shipment tracking, could form the basis of a training data set used to train the ML model to categorize URLs related to shipment tracking.

Step 508 includes the processor 404 determining shipping information based on a URL obtained in step 504 and/or on the web resource associated with this URL. The shipping information includes at least one of an indication that the web resource is for tracking the shipment, a tracking number for the shipment and a shipping provider for the shipment. Determining that the web resource is for tracking the shipment could indicate that the URL is a tracking URL. As such, the URL itself could be added to the shipping information determined in step 508. The shipping information may further include the product(s) being shipped, an order number for the shipment, a shipment status, an expected delivery date and/or or a merchant that initiated the shipment. In some cases, the shipment may be facilitated by multiple shipping providers and/or have multiple associated tracking numbers. Any, one, some or all of the multiple associated tracking numbers can be determined in step 508.

In some implementations of step 508, at least some of the shipping information is obtained from the URL using at least one ML model, which may be one of the ML model(s) 416. The inputs to the ML model may include the URL. However, the entire URL might not always be input into the ML model. Because URLs have a structured nature, certain components of the URL may be extracted and input into the ML model to reduce the total number of characters analysed by the ML model. For example, deterministic methods could be implemented to extract the authority, path and/or query components of a URL and input those components into the ML model. The outputs of the ML model may include an indication of whether or not the URL is related to tracking a shipment, a text string corresponding to the tracking number for the shipment, a text string corresponding to the shipping provider for the shipment, and/or other shipping information. In some implementations, the text string corresponding to the shipping provider is compared to the list of shipping providers in the shipping provider record 412. This may help determine the exact shipping provider that is facilitating the shipment.

An ML model that is used to obtain shipping information from the URL in step 508 may be trained using data obtained from users of a computing platform. For example, when a merchant is fulfilling a customer order on the e-commerce platform, the merchant can provide a tracking URL for the shipment of the order, the shipping provider for the order and the tracking number for the order. This information could be collected across multiple product orders to form the basis of a training data set for the ML model. For example, the ML model could be trained to predict the correct shipping provider and/or tracking number from each URL.

In some implementations, the inputs to an ML model that is used to obtain shipping information from the URL in step 508 can further include a prediction of a first index corresponding to a start of the tracking number in the URL and/or a prediction of a second index corresponding to an end of the tracking number in the URL. These predictions may improve the accuracy and/or reliability of the ML model's determination of the tracking number. For example, the predictions may allow the ML model to disregard some characters in the URL during analysis. The predictions of the first index and the second index may be provided in the form of a probability distribution. For each character of the URL that is input into the ML model, the ML model could be provided with a probability that the character is the first index and/or a probability that the character is the second index.

The prediction of the first index and the prediction of the second index for the tracking number in the URL could be obtained in any of a variety of different ways. In some implementations, a first ML model is implemented to generate the prediction of the first index and/or the second index. This first index and/or second index may then be input into a second ML model, as described above, to obtain a text string corresponding to the tracking number. Furthermore, in some implementations, the first ML model and the second ML model may be implemented together using a single MTL model.

In some implementations, the first ML model categorizes the URL by determining which URL category of a set of predefined URL categories (optionally stored in the URL category record 414) that the URL best fits into. The determined URL category may have a format with a generally fixed position for the tracking number. As such, a prediction of the first index and/or a prediction of the second index may be obtained from the URL category record 414 based on the determined URL category. The URL category could also be associated with a particular shipping provider, and therefore the shipping provider for the shipment may additionally be obtained from the URL category record 414 based on the determined URL category.

In some implementations, both of steps 506, 508 may be at least partially implemented using the first ML model. For example, the first ML model may categorize the URL, where the determined category indicates that the URL relates to shipment tracking and also allows the tracking number and/or the shipping provider to be obtained from the URL.

Similar to the second ML model, the first ML model may be trained using training data obtained from an e-commerce platform. For example, when a merchant is inputting a tracking URL into the e-commerce platform to complete an order, the merchant may be asked to categorize the URL and provide the tracking number and/or the shipping provider associated with the URL. String-matching algorithms could then be used to determine the first index and the second index of the tracking number in the URL, which can form the basis of a training data set for the first ML model.

It should be noted that, in some implementations, only the first ML model is used to obtain shipping information from the URL. For example, the first ML model could determine a category for the URL that provides the first index of the tracking number, the second index of the tracking number and/or the shipping provider. This information may then be used to obtain the tracking number by extracting the tracking number from between the first index and the second index in the URL. Thus, the first ML model might not always be used in combination with the second ML model to determine shipping information.

In step 508, the shipping information obtained from the URL can be supplemented and/or confirmed using shipping information obtained from the web resource associated with the URL. Alternatively, the shipping information can be obtained entirely from the web resource. Obtaining shipping information from the web resource can include accessing the web resource using the URL, obtaining content from the web resource, and/or parsing the content to determine shipping information. Parsing the content can include text and/or image analysis operations, for example, and may be performed at least in part using one of the ML model(s) 416.

A potential benefit of parsing the web resource associated with the URL is that the processor 404 may be able to determine whether the web resource is fraudulent. For example, a ML model (which may be one of the ML model(s) 416) may be trained to recognize fraudulent webpages. After determining that a webpage is fraudulent, the message containing the URL for that webpage can be flagged as a phishing or spam email.

In some implementations, the tracking number and the shipping provider are obtained from both the URL and the web resource. For example, the tracking number and the shipping provider may be first obtained by parsing the URL, and the tracking number and the shipping provider can then be confirmed by parsing the web resource. This provides a degree of redundancy to help ensure that the correct tracking number and shipping provider are being obtained in step 508. In some cases, the processor 404 may search the web resource for text strings that match the tracking number and/or shipping provider obtained from the URL. If such text strings are found in the web resource, then it can be determined that the tracking number and/or shipping provider is confirmed by the web resource. Other deterministic and/or probabilistic methods can also or instead be used to confirm the tracking number and/or shipping provider in the web resource.

In the case that the tracking number and/or the shipping provider obtained from the URL does not match what is obtained from the web resource, then further processing may be performed to resolve the discrepancy. For example, if a URL category is determined for the URL, then the URL category could be used to determine whether the shipping information obtained from the URL or the shipping information from the web resource is considered the most accurate. The URL category record 414 could store indications of how accurately shipping information can be obtained from each URL category and/or from the associated web resources for each URL category. The less accurate shipping information may then be discarded. Alternatively, manual intervention by a user may be used to resolve a discrepancy between a URL and a web resource.

Consider, for example, a case in which a tracking number is extracted from a URL and a tracking number is also extracted from the associated webpage. If these two tracking numbers match, then the tracking number is confirmed and no further action might be taken. Alternatively, if the two tracking numbers differ, then the less accurate tracking number might be discarded. In some cases, a message analysis engine may be configured to treat tracking numbers extracted from URLs as the less accurate tracking numbers. In other cases, a message analysis engine may be configured to treat tracking numbers extracted from webpages as the less accurate tracking numbers.

In some cases, one of the tracking number and the shipping provider is determined by parsing the URL, and the other of the tracking number and the shipping provider is determined by parsing the web resource. Therefore, the shipping information determined from the web resource can add to the cumulative record of shipping information obtained for the message. This might occur when the tracking number or the shipping provider cannot be determined by parsing the URL, and therefore parsing the web resource is performed to supplement the shipping information obtained from the URL. For example, the URL might not include the tracking number, or the tracking number could be encoded or hashed in the URL. Furthermore, multiple different shipping providers could use similar URL formats. As such, a specific shipping provider might not be inferable from the format or determined category of the URL.

In some cases, neither the tracking number nor the shipping provider can be obtained from the URL. Accordingly, in these cases, step 508 may include determining both the tracking number and the shipping provider by parsing the web resource. The URL is used to access the web resource, which is then parsed to obtain the shipping information.

In some cases, only the URL is parsed to obtain the shipping information in step 508. This may occur if the web resource does not include the necessary shipping information, the message analysis engine 402 does not have the capability to analyse the web resource, and/or shipping information is obtained from the URL with a sufficient degree of confidence.

In some cases, a given URL may correspond to an image that includes shipment information such as, for example, an estimated time of arrival. A machine learning model may be trained (e.g., using one or more training sets consisting of examples of such images) to analyze such images and may be employed in extracting information from such images. Additionally or alternatively, techniques such as, for example, optical character recognition may be applied in extracting information from such images.

The ML models that may be implemented in step 508 are examples of probabilistic methods for determining shipping information. In some cases, post-processing steps may be performed on the shipping information obtained using the ML models. An example of post-processing is implementing deterministic methods to confirm and/or supplement the shipping information obtained using ML models.

As noted above, more than one URL might be obtained from the digital content in step 504. Each of these URLs can be analysed in step 508. In some cases, two or more URLs in the digital content can include shipping information. The shipping information obtained from the two or more URLs could be compared to determine if the URLs relate to the same shipment or different shipments. The shipping information could also be compared to determine if the URLs relate to multiple shipping providers delivering the same shipment in multiple stages.

If two URLs relate to the same shipment, then the shipping information obtained from two different URLs can be compared for the purpose of confirmation. Further, shipping information obtained from two URLs in a message may be used to resolve a discrepancy between shipping information obtained from one of the URLs and shipping information obtained from an associated web resource. For example, if the tracking number extracted from a first URL was also determined through the analysis of a second URL in the message, then a different tracking number that was extracted from the web resource associated with the first URL may be disregarded.

According to an example, a first URL and a second URL could be obtained from the digital content in step 504. The first URL and the second URL are associated with a first web resource and a second web resource, respectively. Here, step 508 could include determining that the first URL and the second URL correspond to the same shipment, obtaining the same tracking number from the first URL, the second URL, the first web resource and/or the second web resource, and/or obtaining the same shipping provider from the first URL, the second URL, the first web resource and/or the second web resource.

In some cases, one or more of the URLs extracted from the message in step 504 might not relate to shipment tracking. If the processor 404 determines that a URL is not related to shipment tracking, then analysis of that URL ends and step 508 may proceed to analysing the next URL or proceed to step 510.

Step 510 includes storing the shipping information determined in step 508 in the memory 406 or in another computer-readable medium. In some implementations, the shipping information may be stored in the shipping information record 418. The shipping information may be later used to obtain tracking updates for the shipment. For example, the message analysis engine 402 or the user device 430 may access the shipping information to obtain updated shipping information from the shipping provider that is facilitating the shipment. This may provide an updated delivery date for the shipment, which can be added to the shipping information stored in the memory 406.

As illustrated using the arrow from step 510 to step 502, steps 502, 504, 506, 508, 510 may be repeated multiple times for respective messages. This can build a cumulative record of shipping information pertaining to multiple shipments in the shipping information record 418. These multiple shipments may all be for the same user. By way of example, multiple instances of step 502 can obtain digital content corresponding to multiple messages associated with a user. These messages may be obtained at once or at multiple different times. Each of these messages may correspond to a different product shipment for the customer. Multiple instances of step 504 can obtain URLs from the digital content for each of the messages, and multiple instances of step 508 can obtain shipping information from the URLs and/or their associated web resources. Multiple instances of step 510 can then store this shipping information in the memory 406. This can add shipping information pertaining to multiple shipments for the user to the shipping information record 418.

The shipping information may be used to obtain tracking updates of one or more product shipments for a customer. The obtained tracking updates of the one or more product shipments may be provided for use in presenting an aggregated summary of all product shipment(s) for the customer.

Step 512 is an optional step that includes the processor outputting at least a portion of the shipping information in the shipping information record 418 for display on the user device 430 or another device. For example, the message(s) analysed using the method 500 may correspond to the user of the user device 430, and therefore the user device 430 can be given access to at least some of the shipping information stored in the shipping information record 418. Any, some or all of this shipping information can be output by the message analysis engine 402 for display on the user device 430.

The user of the user device 430 may be permitted to alter at least some of the shipping information stored in the shipping information record 418. For example, using the user device 430, the user may generate an instruction to alter the shipping information record 418. Non-limiting examples of altering the shipping information record 418 include:
- adding shipping information, which may be for a new shipment or an existing shipment;
- removing shipping information when a shipment is received or when some shipping information is incorrect; and
- reorganizing the shipping information based on user preferences.

Additionally or alternatively, altering the shipping information may include a correction of incorrect shipping information. For example, such a correction may include an input of corrected shipping information. In some cases, a user may be presented with one or more options for alternative shipping information. Input of a correction of shipping information may be received responsive to such options and may correspond to a selection of one of the presented options. Notably, where machine learning is employed in obtaining shipping information such as, for example, in manners discussed above, options presented in a such a list of alternatives may include other candidates for shipping information identified by application of a machine learning model such as, for example, candidate shipping information that the machine learning model identified as possible shipping information but with a lower confidence. Additionally, in some implementations, where corrections to shipping information are received, those corrections (whether received by way of input of corrected shipping information, received based on a selection of alternative shipping information, or otherwise) may be later employed in updating/retraining machine learning models (e.g., by adding the corrected information to a training set) for identification of shipping information with a view to improving accuracy.

The order of steps 502, 504, 506, 508, 510, 512 are shown by way of example only. Other orders of steps 502, 504, 506, 508, 510, 512 are also contemplated. For example, step 506 may determine that a message is related to tracking a shipment before step 504 is performed to obtain a URL from the digital content corresponding to the message.

### Examples of obtaining shipping information from a message

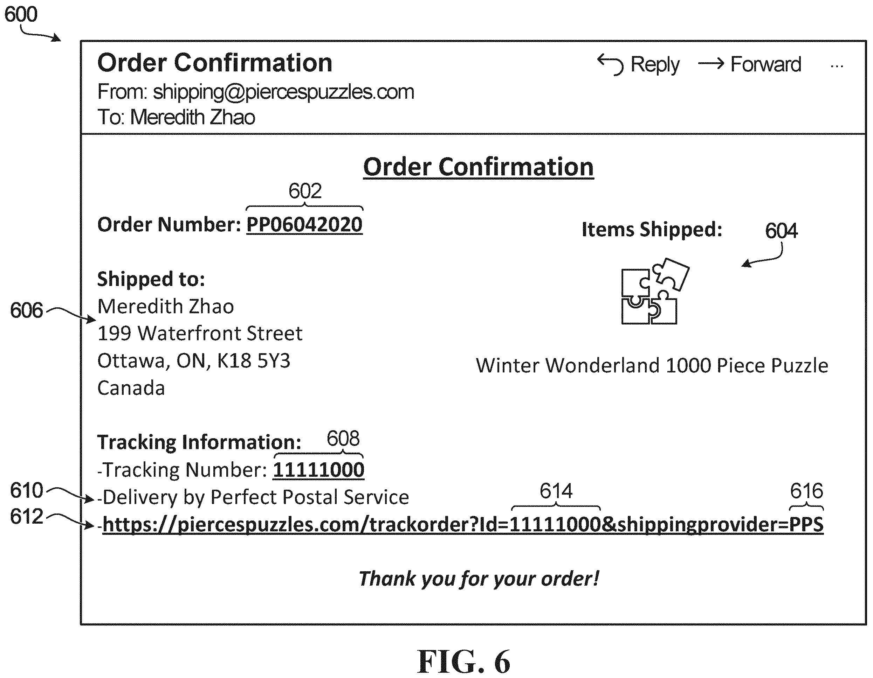

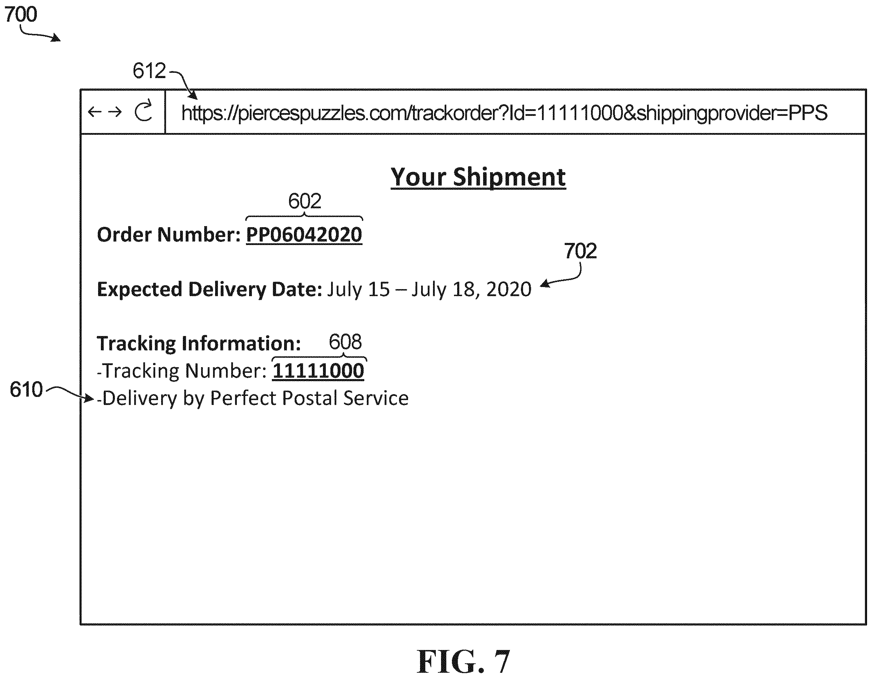

FIGs. 6 and 7 illustrate an example of obtaining shipping information for the shipment of a first product ("Winter Wonderland 1000 Piece Puzzle") to a customer ("Meredith Zhao"). Referring first to FIG. 6, shown is an email message 600 received by the customer from the merchant ("Pierce's Puzzles") that sold the first product. The email message 600 includes an order number 602 corresponding to the shipment, an indication 604 of the first product being shipped, a shipping address 606 for the customer, a tracking number 608 for the shipment, an indication 610 of the shipping provider ("Perfect Postal Service") that is facilitating the shipment and a tracking URL 612 for the shipment. The tracking URL 612 includes a text string 614 corresponding to the tracking number 608 and another text string 616 corresponding to the shipping provider.

FIG. 7 illustrates a webpage 700 corresponding to the tracking URL 612. For example, if the customer were to select the tracking URL 612 in the email message 600, then the customer could be directed to the webpage 700. The webpage 700 includes the order number 602, the tracking number 608, the indication 610 of the shipping provider and an indication 702 of the expected delivery date.

The method 500 can be used to obtain shipping information for the shipment of the first product to the customer. In step 502, digital content corresponding to the email message 600 could be obtained from the customer's account on a messaging service, for example. This digital content may include any, some or all of the content shown in FIG. 6, optionally in a serialized format. In step 504, the tracking URL 612 is extracted from the digital content using a string-matching algorithm, for example. Step 506 can determine that the message 600 relates to tracking the shipment. This may be performed by inputting the digital content of the email message 600 into an ML model to categorize the email message 600 as a message relating to shipment tracking. Alternatively, or in addition, at least a portion of the tracking URL 612 may be input into an ML model to categorize the tracking URL 612 as relating to shipment tracking.

In step 508, shipping information for the shipment of the first product can be obtained from both the tracking URL 612 and the webpage 700. The tracking URL 612 may be parsed to determine that the webpage 700 is for tracking the shipment of the first product. The tracking URL 612 may also be parsed to obtain the text string 614 corresponding to the tracking number 608 and the text string 616 corresponding to the shipping provider. The text string 616 may be compared against a list of shipping providers stored in memory to determine that the text string 616 corresponds to the shipping provider. The merchant that sold and shipped the product is identified in the tracking URL 612 and therefore could also be obtained by parsing the tracking URL 612.

Parsing the tracking URL 612 might involve inputting at least a portion of the tracking URL 612 into one or more ML models. For example, the query component ("Id=11111000&shippingprovider=PPS") might be extracted from the tracking URL 612 using deterministic methods and input into the ML models.

In some cases, the tracking URL 612 is input into a first ML model to categorize the tracking URL 612. The determined category of the tracking URL 612 may predict that the tracking URL 612 corresponds to the merchant and/or the shipping provider. The determined category of the tracking URL 612 may also or instead provide a prediction of a first index corresponding to the start of the text string 614 and/or a prediction of a second index corresponding to the end of the text string 614. In the illustrated example, the first index is 42 and the second index is 49 (counting from the start of the tracking URL 612). The first index and the second index could be used to extract the tracking number 608 from the tracking URL 612. The tracking URL 612, the predicted shipping provider, the predicted first index and/or the predicted second index could then be input into a second ML model. The output of the second ML model can include a refined prediction of the shipping provider and/or the tracking number 608. Determining the shipping provider and/or the tracking number 608 in this multi-step approach may provide more accurate results, as the second ML model can benefit from the results of the first ML model. Alternatively, the first ML model or second ML model could be used in isolation to determine the shipping provider and/or the tracking number 608.

The webpage 700 can also be parsed in step 508 to confirm the shipping provider, the merchant and/or the tracking number 608 obtained from the tracking URL 612. Further, parsing the webpage 700 can determine the expected delivery date from the indication 702 and/or determine the order number 602. Probabilistic methods implemented using an ML model, for example, could be used to parse the webpage 700 and obtain this shipping information.

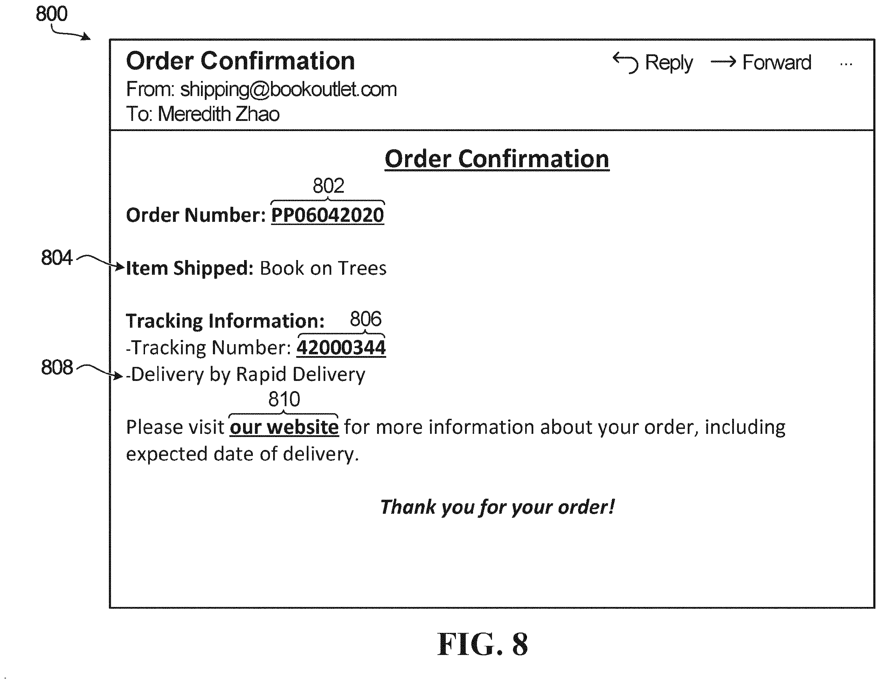

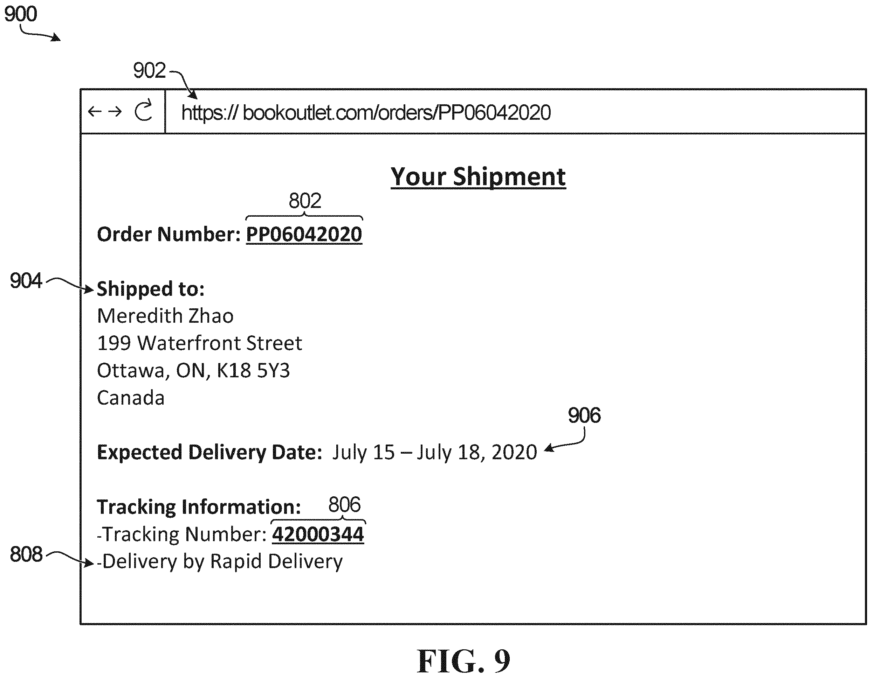

FIGs. 8 and 9 illustrate an example of obtaining shipping information for the shipment of a second product ("Book on Trees") to the customer ("Meredith Zhao"). Referring first to FIG. 8, shown is an email message 800 received by the customer from the merchant ("Book Outlet") that sold the product. The email message 800 includes an order number 802 corresponding to the shipment, an indication 804 of the product being shipped, a tracking number 806 for the shipment, an indication 808 of the shipping provider ("Rapid Delivery") that is facilitating the shipment and a hyperlink 810. The hyperlink 810 corresponds to a tracking URL 902 shown in FIG. 9.

FIG. 9 illustrates a webpage 900 corresponding to the tracking URL 902. The webpage 900 includes the order number 802, the tracking number 806, the indication 808 of the shipping provider, a shipping address 904 of the customer and an indication 906 of the expected delivery date.

The method 500 can also be used to obtain shipping information for the shipment of the second product to the customer. In step 502, digital content corresponding to the email message 800 could be obtained from the customer's account on a messaging service. This may be the same messaging service that the email message 600 was obtained from, or a different messaging service. In steps 504, 506, the tracking URL 902 is extracted from the hyperlink 810 and the email message 800 is determined to be related to tracking the shipment.

Step 508 can then be performed to obtain shipping information from the tracking URL 902 and from the webpage 900. Parsing the tracking URL 902 may determine the merchant and/or the order number for the shipment of the second product, which are identified in the tracking URL 902. However, the tracking URL 902 does not include any string corresponding to the tracking number 806, and therefore it might not be possible to determine the tracking number 806 from the tracking URL 902. However, the tracking number 806 can be determined by parsing the webpage 900.

In some cases, the shipping provider ("Rapid Delivery") may be determined from the tracking URL 902. For example, the tracking URL 902 may be categorized to determine that the tracking URL 902 corresponds to the merchant. If the merchant typically only uses one shipping provider, then this categorization of the tracking URL 902 could also indicate the shipping provider for the shipment. The shipping provider can also be obtained or confirmed by parsing the webpage 900.

Further shipping information can also be obtained by parsing the webpage 900, including the order number 802 and the expected delivery date indicated at 906.

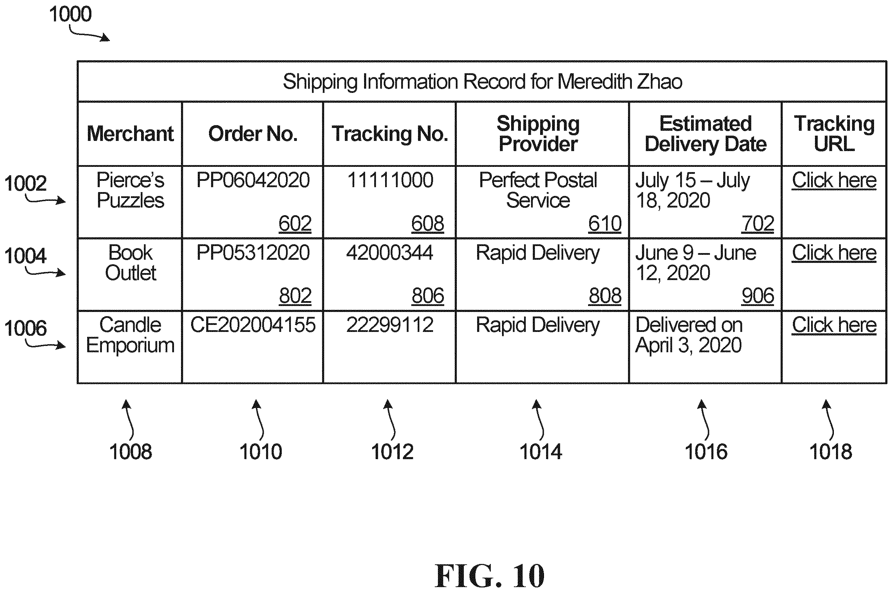

The shipping information obtained for the shipment of the first product to the customer and for the shipment of the second product to the customer could be added to a consolidated list or record of shipping information. FIG. 10 illustrates an example of a consolidated record 1000 of shipping information for the customer ("Meredith Zhao"). The record 1000 includes three rows 1002, 1004, 1006 of shipping information, where each of the rows 1002, 1004, 1006 pertains to a different shipment. The row 1002 corresponds to the shipment of the first product ("Winter Wonderland 1000 Piece Puzzle"), the row 1004 corresponds to the shipment of the second product ("Book on Trees"), and the row 1006 corresponds to the shipment of a further product. The record 1000 further includes multiple columns 1008, 1010, 1012, 1014, 1016, 1018 of shipping information for each shipment. The column 1008 indicates a merchant for each shipment, the column 1010 indicates an order number for each shipment, the column 1012 indicates a tracking number for each shipment, the column 1014 indicates a shipping provider for each shipment, the column 1016 indicates an estimated or confirmed delivery date for each shipment, and the column 1018 includes a hyperlink with a tracking URL for each shipment.

In the illustrated example, the shipping information in the row 1002 is obtained through the analysis of the tracking URL 612 and the webpage 700, as discussed above. As such, the row 1002 includes the order number 602, the tracking number 608, the indication 610 of the shipping provider and the indication 702 of the estimated delivery date. The hyperlink located in the row 1002 and the column 1018 corresponds to the tracking URL 612, which allows the customer to access the webpage 700 from the record 1000. Similarly, the shipping information in the row 1004 is obtained through the analysis of the tracking URL 902 and the webpage 900, as discussed above. As such, the row 1004 includes the order number 802, the tracking number 806, the indication 808 of the shipping provider and the indication 906 of the estimated delivery date. The hyperlink in the row 1004 and the column 1018 corresponds to the tracking URL 902, allowing the customer to access the webpage 900 from the record 1000.

The record 1000 could be continuously and/or intermittently updated as the customer places new orders for products and the shipping information for those orders becomes available through the customer's messages. Further, the customer can manually alter the record 1000.

### Conclusion

Although the present invention has been described with reference to specific features and embodiments thereof, various modifications and combinations can be made thereto without departing from the invention. The description and drawings are, accordingly, to be regarded simply as an illustration of some embodiments of the invention as defined by the appended claims, and are contemplated to cover any and all modifications, variations, combinations or equivalents that fall within the scope of the present invention. Therefore, although the present invention and its advantages have been described in detail, various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

Moreover, any module, component, or device exemplified herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc^{™}, or other optical storage, volatile and nonvolatile, removable and non-removable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Any application or module herein described may be implemented using computer/processor readable/executable instructions that may be stored or otherwise held by such non-transitory computer/processor readable storage media.

## Claims

1. A computer-implemented method comprising:
identifying a plurality of messages for a customer;
extracting from messages of the plurality of messages, shipping information for at least one shipment, the extracting including:
obtaining digital content corresponding to a given message (600) of the plurality of messages;
obtaining (506), from the digital content, a uniform resource locator, URL, (602) for a web resource;
determining (508), based on the URL (602) and on the web resource (700), shipping information for a particular shipment by inputting the URL into one or more machine learning, ML, models and obtaining, based on an output of the one or more ML models, a text string corresponding to the tracking number from the URL, the shipping information comprising at least one of:
an indication that the web resource is for tracking the particular shipment,
a tracking number (614) for the particular shipment, and
a shipping provider (616) for the particular shipment; and
storing (510), in memory, the shipping information for obtaining tracking updates for the particular shipment.

2. The computer-implemented method of claim 1 further comprising:
obtaining, based on the shipping information, tracking updates for the at least one shipment; and
providing the tracking updates for use in presenting an aggregated summary of product shipments for the customer.

3. The computer-implemented method of claim 1 or 2, wherein determining the shipping information further comprises:
obtaining a prediction, the prediction comprising a first index corresponding to a start of the tracking number in the URL and a second index corresponding to an end of the tracking number in the URL; and
inputting the first index and the second index into the one or more ML models.

4. The computer-implemented method of claim 1 or 2, wherein determining the shipping information comprises:
inputting the URL into the one or more ML models; and
obtaining, from an output of the one or more ML models, a text string corresponding to the shipping provider that is selected from a set of predefined shipping providers.

5. The computer-implemented method of any of claims 1 to 4, wherein determining the shipping information comprises:
determining the shipping provider (616) by parsing the URL (612); and
confirming the shipping provider (616) by parsing the web resource.

6. The computer-implemented method of any of claims 1 to 4, wherein determining the shipping information comprises:
determining the shipping provider (616) by parsing the URL (612); and
determining the shipping provider (616) by parsing the web resource (700).

7. The computer-implemented method of any of claims 1 to 4, wherein determining the shipping information comprises:
determining the shipping provider (616) by parsing the web resource (700).

8. The computer-implemented method of any preceding claim, wherein at least one of the one or more ML models comprises a multi-task learning model.

9. The computer-implemented method of any preceding claim, wherein the URL is a first URL (612), the web resource (700) is a first web resource, the tracking number (614) is a first tracking number and the shipping provider (616) is a first shipping provider, the method further comprising:
obtaining, from the digital content, a second URL for a second web resource;
determining, based on the second URL and on the second web resource:
that the second web resource is for tracking the shipment,
a second tracking number for the shipment, and
a second shipping provider for the shipment; and
determining that the first tracking number matches the second tracking number and that the first shipping provider matches the second shipping provider.

10. The computer-implemented method of any preceding claim, further comprising:
determining, based on the digital content, that the message (600) relates to tracking the shipment.

11. The computer-implemented method of claim 10, wherein determining that the message (600) relates to tracking the shipment comprises:
inputting the digital content into the one or more ML models;
obtaining, from an output of the one or more ML models, a message category for the message that is selected from a set of predefined message categories; and
determining that the message category relates to shipment tracking.

12. The computer-implemented method of claim 10, wherein determining that the message relates to tracking the shipment comprises:
inputting the URL (612) into the one or more ML models;
obtaining, from an output of the one or more ML models, a URL category for the URL that is selected from a set of predefined URL categories; and
determining that the URL category relates to shipment tracking.

13. The computer-implemented method of any preceding claim, wherein:
the message (600) corresponds to a particular user; and
storing the shipping information comprises storing the shipping information in a shipping information record (1000) for a plurality of shipments associated with the particular user,
the method further comprises outputting at least a portion of the shipping information record (1000) for display on a device associated with the particular user.

14. A system (400) comprising:
at least one processor (404) configured to carry out the method of any one of the preceding claims; and
memory (406) to store the shipping information.

15. A computer program which, when executed on a processor of a computer, is configured to carry out the method of any one of claims 1 to 13.

## Patentansprüche

1. Ein computerimplementiertes Verfahren, das Folgendes beinhaltet:
Identifizieren einer Vielzahl von Nachrichten für einen Kunden;
Extrahieren, aus Nachrichten der Vielzahl von Nachrichten, von Lieferinformationen für mindestens eine Lieferung, wobei das Extrahieren Folgendes beinhaltet:
Erhalten von digitalem Inhalt, der einer bestimmten Nachricht (600) der Vielzahl von Nachrichten entspricht;
Erhalten (506), aus dem digitalen Inhalt, einer Uniform Resource Locator, URL, (602) für eine Webressource;
Bestimmen (508), basierend auf der URL (602) und auf der Webressource (700), von Lieferinformationen für eine spezielle Lieferung durch Eingeben der URL in ein oder mehrere Maschinenlernmodelle, ML-Modelle, und Erhalten, basierend auf einer Ausgabe des einen oder der mehreren ML-Modelle, einer Textfolge, die der Sendungsnummer von der URL entspricht, wobei die Lieferinformationen mindestens eines von Folgenden beinhalten:
eine Angabe, dass die Webressource zum Nachverfolgen der speziellen Lieferung ist,
eine Nachverfolgungsnummer (614) für die spezielle Lieferung, und
einen Lieferdienst (616) für die spezielle Lieferung; und
Speichern (510), im Speicher, der Lieferinformationen zum Erhalten von Nachverfolgungsaktualisierungen für die spezielle Lieferung.

2. Computerimplementiertes Verfahren gemäß Anspruch 1, das ferner Folgendes beinhaltet:
Erhalten, basierend auf den Lieferinformationen, von Nachverfolgungsaktualisierungen für die mindestens eine Lieferung; und
Bereitstellen der Nachverfolgungsaktualisierungen zur Verwendung bei der Darstellung einer aggregierten Zusammenfassung von Produktlieferungen für den Benutzer.

3. Computerimplementiertes Verfahren gemäß Anspruch 1 oder 2, wobei das Bestimmen der Lieferinformationen ferner Folgendes beinhaltet:
Erhalten einer Vorhersage, wobei die Vorhersage einen ersten Index, der einem Anfang der Nachverfolgungsnummer in der URL entspricht, und einen zweiten Index, der einem Ende der Nachverfolgungsnummer in der URL entspricht, beinhaltet; und
Eingeben des ersten Index und des zweiten Index in das eine oder die mehreren ML-Modelle.

4. Computerimplementiertes Verfahren gemäß Anspruch 1 oder 2, wobei das Bestimmen der Lieferinformationen Folgendes beinhaltet:
Eingeben der URL in das eine oder die mehreren ML-Modelle; und
Erhalten, von einer Ausgabe des einen oder der mehreren ML-Modelle, einer Textfolge, die dem Lieferdienst entspricht, der aus einer Menge von vordefinierten Lieferdiensten ausgewählt ist.

5. Computerimplementiertes Verfahren gemäß einem der Ansprüche 1 bis 4, wobei das Bestimmen der Lieferinformationen Folgendes beinhaltet:
Bestimmen des Lieferdiensts (616) durch Parsen der URL (612); und
Bestätigen des Lieferdiensts (616) durch Parsen der Webressource.

6. Computerimplementiertes Verfahren gemäß einem der Ansprüche 1 bis 4, wobei das Bestimmen der Lieferinformationen Folgendes beinhaltet:
Bestimmen des Lieferdiensts (616) durch Parsen der URL (612); und
Bestimmen des Lieferdiensts (616) durch Parsen der Webressource (700).

7. Computerimplementiertes Verfahren gemäß einem der Ansprüche 1 bis 4, wobei das Bestimmen der Lieferinformationen Folgendes beinhaltet:
Bestimmen des Lieferdiensts (616) durch Parsen der Webressource (700).

8. Computerimplementiertes Verfahren gemäß einem der vorhergehenden Ansprüche, wobei mindestens eines des einen oder der mehreren ML-Modelle ein Multitasklernmodell beinhaltet.

9. Computerimplementiertes Verfahren gemäß einem der vorhergehenden Ansprüche, wobei die URL eine erste URL (612) ist, die Webressource (700) eine erste Webressource ist, die Nachverfolgungsnummer (614) eine erste Nachverfolgungsnummer ist und der Lieferdienst (616) ein erster Lieferdienst ist, wobei das Verfahren ferner Folgendes beinhaltet:
Erhalten, aus dem digitalen Inhalt, einer zweiten URL für eine zweite Webressource;
Bestimmen, basierend auf der zweiten URL und auf der zweiten Webressource:
dass die zweite Webressource zum Nachverfolgen der Lieferung ist,
einer zweiten Nachverfolgungsnummer für die Lieferung, und
eines zweiten Lieferdiensts für die Lieferung; und
Bestimmen, dass die erste Nachverfolgungsnummer mit der zweiten Nachverfolgungsnummer übereinstimmt und dass der erste Lieferdienst mit dem zweiten Lieferdienst übereinstimmt.

10. Computerimplementiertes Verfahren gemäß einem der vorhergehenden Ansprüche, das ferner Folgendes beinhaltet:
Bestimmen, basierend auf dem digitalen Inhalt, dass die Nachricht (600) sich auf das Nachverfolgen der Lieferung bezieht.

11. Computerimplementiertes Verfahren gemäß Anspruch 10, wobei das Bestimmen, dass die Nachricht (600) sich auf das Nachverfolgen der Lieferung bezieht, Folgendes beinhaltet:
Eingeben des digitalen Inhalts in das eine oder die mehreren ML-Modelle;
Erhalten, aus einer Ausgabe des einen oder der mehreren ML-Modelle, einer Nachrichtenkategorie für die Nachricht, die aus einer Menge von vordefinierten Nachrichtenkategorien ausgewählt ist; und
Bestimmen, dass die Nachrichtenkategorie sich auf das Nachverfolgen der Lieferung bezieht.

12. Computerimplementiertes Verfahren gemäß Anspruch 10, wobei das Bestimmen, dass die Nachricht sich auf das Nachverfolgen der Lieferung bezieht, Folgendes beinhaltet:
Eingeben der URL (612) in das eine oder die mehreren ML-Modelle;
Erhalten, aus einer Ausgabe des einen oder der mehreren ML-Modelle, einer URL-Kategorie für die URL, die aus einer Menge von vordefinierten URL-Kategorien ausgewählt ist; und
Bestimmen, dass die URL-Kategorie sich auf das Nachverfolgen der Lieferung bezieht.

13. Computerimplementiertes Verfahren gemäß einem der vorhergehenden Ansprüche, wobei:
die Nachricht (600) einem speziellen Benutzer entspricht; und
das Abspeichern der Lieferinformationen das Abspeichern der Lieferinformationen in einer Lieferinformationsaufzeichnung (1000) für eine Vielzahl von Lieferungen, die mit dem speziellen Benutzer assoziiert sind, beinhaltet,
das Verfahren ferner das Ausgeben von mindestens einem Teil der Lieferinformationsaufzeichnung (1000) zur Anzeige auf einer Vorrichtung, die mit einem speziellen Benutzer assoziiert ist, beinhaltet.

14. Ein System (400), das Folgendes beinhaltet:
mindestens einen Prozessor (404), der konfiguriert ist, um das Verfahren gemäß einem der vorhergehenden Ansprüche vorzunehmen; und
einen Speicher (406), um die Lieferinformationen zu speichern.

15. Ein Computerprogramm, das, wenn es auf einem Prozessor eines Computers ausgeführt wird, konfiguriert ist, um das Verfahren gemäß einem der Ansprüche 1 bis 13 vorzunehmen.

## Revendications

1. Un procédé mis en œuvre par ordinateur comprenant :
l'identification d'une pluralité de messages pour un consommateur ;
l'extraction, à partir de messages de la pluralité de messages, d'informations d'expédition pour au moins un envoi, l'extraction incluant :
l'obtention de contenu numérique correspondant à un message donné (600) de la pluralité de messages ;
l'obtention (506), à partir du contenu numérique, d'un localisateur uniforme de ressources, URL (*Uniform Resource Locator*)*,* (602) pour une ressource Web ;
la détermination (508), sur la base de l'URL (602) et de la ressource Web (700), d'informations d'expédition pour un envoi particulier par entrée de l'URL dans un ou plusieurs modèles d'apprentissage machine, ML (*Machine Learning*), et
l'obtention, sur la base d'une sortie des un ou plusieurs modèles de ML, d'une chaîne de texte correspondant au numéro de suivi à partir de l'URL, les informations d'expédition comprenant au moins un élément parmi :
une indication que la ressource Web sert au suivi de l'envoi particulier,
un numéro de suivi (614) pour l'envoi particulier, et
un prestataire d'expédition (616) pour l'envoi particulier ; et
le stockage (510), dans de la mémoire, des informations d'expédition pour l'obtention de mises à jour de suivi pour l'envoi particulier.

2. Le procédé mis en œuvre par ordinateur de la revendication 1 comprenant en outre :
l'obtention, sur la base des informations d'expédition, de mises à jour de suivi pour l'au moins un envoi ; et
la fourniture des mises à jour de suivi pour leur utilisation dans la présentation d'un récapitulatif agrégé d'envois de produits pour le consommateur.

3. Le procédé mis en œuvre par ordinateur de la revendication 1 ou de la revendication 2, où la détermination des informations d'expédition comprend en outre :
l'obtention d'une prédiction, la prédiction comprenant un premier index correspondant à un début du numéro de suivi dans l'URL et un deuxième index correspondant à une fin du numéro de suivi dans l'URL ; et
l'entrée du premier index et du deuxième index dans les un ou plusieurs modèles de ML.

4. Le procédé mis en œuvre par ordinateur de la revendication 1 ou de la revendication 2, où la détermination des informations d'expédition comprend :
l'entrée de l'URL dans les un ou plusieurs modèles de ML ; et
l'obtention, à partir d'une sortie des un ou plusieurs modèles de ML, d'une chaîne de texte correspondant au prestataire d'expédition qui est sélectionné dans un ensemble de prestataires d'expédition prédéfinis.

5. Le procédé mis en œuvre par ordinateur de n'importe lesquelles des revendications 1 à 4, où la détermination des informations d'expédition comprend :
la détermination du prestataire d'expédition (616) par analyse syntaxique de l'URL (612) ; et
la confirmation du prestataire d'expédition (616) par analyse syntaxique de la ressource Web.

6. Le procédé mis en œuvre par ordinateur de n'importe lesquelles des revendications 1 à 4, où la détermination des informations d'expédition comprend :
la détermination du prestataire d'expédition (616) par analyse syntaxique de l'URL (612) ; et
la détermination du prestataire d'expédition (616) par analyse syntaxique de la ressource Web (700).

7. Le procédé mis en œuvre par ordinateur de n'importe lesquelles des revendications 1 à 4, où la détermination des informations d'expédition comprend :
la détermination du prestataire d'expédition (616) par analyse syntaxique de la ressource Web (700).

8. Le procédé mis en œuvre par ordinateur de n'importe quelle revendication précédente, où au moins l'un des un ou plusieurs modèles de ML comprend un modèle d'apprentissage multitâche.

9. Le procédé mis en œuvre par ordinateur de n'importe quelle revendication précédente, où l'URL est un premier URL (612), la ressource Web (700) est une première ressource Web, le numéro de suivi (614) est un premier numéro de suivi et le prestataire d'expédition (616) est un premier prestataire d'expédition, le procédé comprenant en outre :
l'obtention, à partir du contenu numérique, d'un deuxième URL pour une deuxième ressource Web ;
la détermination, sur la base du deuxième URL et de la deuxième ressource Web :
que la deuxième ressource Web sert au suivi de l'envoi,
d'un deuxième numéro de suivi pour l'envoi, et
d'un deuxième prestataire d'expédition pour l'envoi ; et
la détermination que le premier numéro de suivi concorde avec le deuxième numéro de suivi et que le premier prestataire d'expédition concorde avec le deuxième prestataire d'expédition.

10. Le procédé mis en œuvre par ordinateur de n'importe quelle revendication précédente, comprenant en outre :
la détermination, sur la base du contenu numérique, que le message (600) concerne un suivi de l'envoi.

11. Le procédé mis en œuvre par ordinateur de la revendication 10, où la détermination que le message (600) concerne un suivi de l'envoi comprend :
l'entrée du contenu numérique dans les un ou plusieurs modèles de ML ;
l'obtention, à partir d'une sortie des un ou plusieurs modèles de ML, d'une catégorie de messages pour le message qui est sélectionné dans un ensemble de catégories de messages prédéfinies ; et
la détermination que la catégorie de messages concerne un suivi d'envoi.

12. Le procédé mis en œuvre par ordinateur de la revendication 10, où la détermination que le message concerne un suivi de l'envoi comprend :
l'entrée de l'URL (612) dans les un ou plusieurs modèles de ML ;
l'obtention, à partir d'une sortie des un ou plusieurs modèles de ML, d'une catégorie d'URL pour l'URL qui est sélectionné dans un ensemble de catégories d'URL prédéfinies ; et
la détermination que la catégorie d'URL concerne un suivi d'envoi.

13. Le procédé mis en œuvre par ordinateur de n'importe quelle revendication précédente, où :
le message (600) correspond à un utilisateur particulier ; et
le stockage des informations d'expédition comprend le stockage des informations d'expédition dans un registre d'informations d'expédition (1000) pour une pluralité d'envois associés à l'utilisateur particulier,
le procédé comprend en outre la délivrance en sortie d'au moins une portion du registre d'informations d'expédition (1000) pour son affichage sur un dispositif associé à l'utilisateur particulier.

14. Un système (400) comprenant :
au moins un processeur (404) configuré pour effectuer le procédé de n'importe laquelle des revendications précédentes ; et
de la mémoire (406) pour stocker les informations d'expédition.

15. Un programme d'ordinateur qui, lorsqu'il est exécuté sur un processeur d'un ordinateur, est configuré pour effectuer le procédé de n'importe laquelle des revendications 1 à 13.
